# EUROPÄISCHE PATENTSCHRIFT

(11) **EP 3 099 724 B1**
(45) Veröffentlichungstag und Bekanntmachung des Hinweises auf die Patenterteilung: **15.11.2017**
(21) Anmeldenummer: 15702234.4
(22) Anmeldetag: 30.01.2015
(51) Int. Cl.: C08G 18/48, C08G 18/32, C08G 18/73, C08G 18/75, C08G 18/83, C08L 77/02, C08G 69/14, C08G 18/08, C08G 69/18, C08G 18/76, C08G 18/20

(54) **VERFAHREN ZUR HERSTELLUNG EINES THERMOPLASTISCHEN COPOLYMERS AUS POLYCAPROLACTAM UND THERMOPLASTISCHEM POLYURETHAN**
PROCESS FOR PREPARING A THERMOPLASTIC COPOLYMER CONSISTING OF POLYCAPROLACTAM AND A THERMOPLASTIC POLYURETHANE
PROCÉDÉ POUR PRÉPARER UN COPOLYMÈRE THERMOPLASTIQUE CONSISTANT EN POLYCAPROLACTAME ET POLYURÉTHANE THERMOPLASTIQUE

(30) Priorität: 31.01.2014 EP 14153514
(43) Veröffentlichungstag der Anmeldung: 07.12.2016
(73) Patentinhaber: BASF SE, 67056 Ludwigshafen am Rhein (DE)
(72) Erfinder: DESBOIS, Philippe, 68535 Edingen-Neckarhausen (DE); HOLLMANN, Rajan, 49152 Bad Essen (DE); KEMPFERT, Dirk, 32351 Stemwede-Dielingen (DE); BRUCHMANN, Bernd, 67251 Freinsheim (DE); THIELBEER, Frank, 39128 Magdeburg (DE); MÜLHAUPT, Rolf, 79117 Freiburg (DE)
(86) Internationale Anmeldenummer: PCT/EP2015/051898
(87) Internationale Veröffentlichungsnummer: WO 2015/114076

(56) Entgegenhaltungen:
- DE-A1-102006 036 539
- G.S. YANG: "Preparation and characterisation of thermoplastic polyurethane elastomer and polyamide 6 blends by in situ anionic ring-opening polymerization of -caprolactam", POLYMER ENGINEERING AND SCIENCE, Bd. 46, 2006, Seiten 1196-1203, XP002738412, in der Anmeldung erwähnt
- DATABASE WPI Week 200713 Thomson Scientific, London, GB; AN 2007-125006 XP002738413, & CN 1 844 193 A (UNIV HUAQIAO) 11. Oktober 2006 (2006-10-11)

## Beschreibung

Die vorliegende Erfindung betrifft ein Verfahren zur Herstellung eines thermoplastischen Copolymers aus Polycaprolactam und thermoplastischem Polyurethan (TPU), mittels dieses Verfahrens erhaltene thermoplastische Copolymere sowie aus derartigen Copolymeren hergestellte Formkörper.

Durch Copolymerisation von mindestens zwei Polymeren in Schmelze können Copolymere erhalten werden, deren chemische und/oder mechanische Eigenschaften gegenüber den ursprünglich eingesetzten Polymeren verbessert sind. Eine Copolymerisation einer Schmelze von mindestens zwei Polymeren ist auch dann möglich, wenn die als Ausgangsstoffe eingesetzten Polymere lediglich teilmischbar oder nicht-mischbar sind, da die dabei entstehenden Copolymere als Verträglichkeitsvermittler zwischen den eingesetzten teilbeziehungsweise nicht-mischbaren Polymeren wirken, welche eine Reduktion der Grenzflächenspannung an der Phasengrenze zwischen den teil- beziehungsweise nichtmischbarer Polymeren ermöglichen und die Adhäsion zwischen den teil- beziehungsweise nicht-mischbaren Polymeren erhöhen.

G.S. Yang et. al., "Preparation and characterisation of thermoplastic polyurethane elastomer and polyamide 6 blends by in situ anionic ring-opening polymerization of ε-caprolactam", Polymer Engineering and Science 2006, 46, S. 1196-1203 und G.S. Yang et. al. "A novel approach to the preparation of thermoplastic polyurethane elastomer and polyamide 6 blends by in situ anionic ring-opening polymerisation of epsilon-caprolactam", Polym. Int. 2006, 55, Seiten 643-649 offenbaren die Herstellung von Blends aus Polycaprolactam und thermoplastischem Polyester-basiertem Polyurethanelastomer (TPEU). Diese Blends werden erhalten, indem zu einer eine Temperatur von 160 °C aufweisenden Mischung aus Caprolactam und einem TPEU basierend auf Poly(tetramethylenetherglycol) und Methylendiphenyldiisocyanat (MDI) Natrium-Caprolactam als Polymerisationskatalysator zugegeben wird. Diese Mischung wird für 30 min auf 160 °C gehalten, und die Polymerisation wird bei einer Temperatur von 180 °C für 60 min durchgeführt. Das von G.S. Yang et. al. beschriebene Verfahren hat den Nachteil, dass die Polymerisation bei einer relativ hohen Temperatur und für einen relativ langen Zeitraum durchgeführt wird. Ein weiterer Nachteil dieses Verfahrens ist, dass der so erhaltene Blend aufwändig aufgearbeitet werden muss mittels Extraktion in THF; Auflösen in Ameisensäure und mehrfachem Ausfällen mit einem Überschuss an THF, um aus dem Blend ein auf TPEU und Polycaprolactam basierendes Copolymer zu isolieren.

DE 10 2006 036 539 A1 offenbart ein Verfahren zur Herstellung thermoplastisch verarbeitbarer Formmassen aus einem Gemisch aus Polyamid und thermoplastischem Polyurethan. Die Formmassen werden hergestellt mittels in situ-Polymerisation einer Schmelze enthaltend C4-C12 Lactam beziehungsweise Lactamgemisch und thermoplastisches Polyurethan in Gegenwart eines basischen Katalysators bei einer Temperatur im Bereich von 180 bis 260 °C. Bei dieser Polymerisation werden Copolymere aus Polyamid und thermoplastischem Polyurethan gebildet. In bevorzugten Ausführungsbeispielen wird zu einer eine Temperatur von 100 °C aufweisenden Mischung aus Laurinlactam alleine oder in Kombination mit Caprolactam und einem auf Polycaprolacton und Methylendiphenyldiisocyanat (MDI) basierenden thermoplastischen Polyurethan Natriumacetanilid als Polymerisationskatalysator zugegeben, und die Polymerisation wird durch Erhöhung der Temperatur der Mischung auf 225 bis 240 °C eingeleitet. Das Verfahren gemäß DE 10 2006 036 539 A1 hat den Nachteil, dass die Polymerisation bei einer relativ hohen Temperatur durchgeführt wird.

Es ist eine Aufgabe der vorliegenden Erfindung, ein verbessertes Verfahren zur Herstellung von Copolymeren aus Polycaprolactam und thermoplastischem Polyurethan bereitzustellen.

Es wurde überraschend gefunden, dass diese Aufgabe durch ein Verfahren zur Herstellung eines thermoplastischen Copolymers aus Polycaprolactam und thermoplastischem Polyurethan gelöst wird, in welchem ein spezielles thermoplastisches Polyurethan eingesetzt wird, welches eine besonders vorteilhafte, niedrige Polymerisationstemperatur ermöglicht.

Daher betrifft die vorliegende Erfindung ein Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
   (i) einem Alkylendiisocyanat;
   (ii) einem Alkylendiol; und
   (iii) einem Polyalkylenetherbasierenden Polyurethans mit einer Schmelztemperatur T₀;
c) Herstellen einer flüssigen Mischung einer Temperatur T₁ enthaltend das Caprolactam und das thermoplastische Polyurethan;
d) Zugeben eines Polymerisationskatalysators zur flüssigen Mischung gemäß c) unter Erhalt einer Mischung enthaltend das Caprolactam und das thermoplastische Polyurethan in einem Massenverhältnis von Caprolactam zu thermoplastischem Polyurethan im Bereich von 3:1 bis 1:4, und Polymerisieren bei einer Temperatur T₂ von höchstens 175 °C unter Erhalt des thermoplastischen Copolymers.

Es wurde überraschend gefunden, dass durch die Bereitstellung des speziellen aliphatischen thermoplastischen Polyurethans gemäß b) das Polymerisieren gemäß d) bei einer besonders vorteilhaften, niedrigen Polymerisationstemperatur T₂ von höchstens 175 °C ermöglicht wird, ohne dass es zu störenden Kristallisationen und/oder Ausfällungen in der Polymerisationsmischung kommt. Zudem werden dank der im Vergleich zum Stand der Technik niedrigeren Polymerisationstemperatur T₂ unerwünschte Nebenreaktionen, welche bei höheren Polymerisationstemperaturen auftreten können, vermieden. Demnach entstehen vorteilhafterweise weniger Nebenprodukte, wodurch die Ausbeute des Verfahrens erhöht wird und die Aufreinigung des Endprodukts erleichtert wird. Des Weiteren wurde überraschend gefunden, dass durch die Bereitstellung eines aliphatischen thermoplastischen Polyurethans gemäß b) das Polymerisieren gemäß d) schneller abläuft als eine Copolymerisation von Caprolactam mit einem aromatischen thermoplastischem Polyurethan, welches mindestens eine Diisocyanat-, Diol- und Ether-Komponente mit aromatischem Rest aufweist.

Es ist eine weitere Aufgabe der vorliegenden Erfindung, Copolymere aus Polycaprolactam und thermoplastischem Polyurethan mit verbesserten mechanischen Eigenschaften bereitzustellen.

Es wurde überraschend gefunden, dass diese Aufgabe durch eine spezielle Auswahl des thermoplastischen Polyurethans als Bestandteil des erfindungsgemäßen, auf Polycaprolactam und einem thermoplastischen Polyurethan basierenden Copolymers gelöst werden kann. Dieses spezielle thermoplastische Polyurethan ermöglicht eine vorteilhafte Einstellung der mechanischen Eigenschaften des erfindungsgemäßen Copolymers.

Daher betrifft die vorliegende Erfindung außerdem ein thermoplastisches Copolymer, welches basiert auf Polycaprolactam und einem auf
(i) einem Alkylendiisocyanat;
(ii) einem Alkylendiol; und
(iii) einem Polyalkylenether
basierenden thermoplastischen Polyurethan,
wobei das Copolymer das thermoplastische Polyurethan in einer Menge von 25 bis 80 Gew.-%, (Gewichts-%) bezogen auf die Summe der Gewichte des im Copolymer enthaltenen Caprolactams und thermoplastischen Polyurethans, enthält.

Zudem ist es eine weitere Aufgabe der vorliegenden Erfindung, aus thermoplastischen Copolymeren basierend auf Polycaprolactam und thermoplastischem Polyurethan hergestellte Formkörper mit verbesserten mechanischen Eigenschaften bereitzustellen.

Es wurde überraschend gefunden, dass diese Aufgabe durch einen Formkörper, welcher aus dem erfindungsgemäßen Copolymer hergestellt ist, gelöst wird.

Daher betrifft die vorliegende Erfindung zudem einen Formkörper, welcher hergestellt oder herstellbar ist aus dem erfindungsgemäßen thermoplastischen Copolymer.

### Schritt a)

Die Bereitstellung gemäß a) unterliegt grundsätzlich keiner besonderen Beschränkung. Beispielsweise kann das Caprolactam gemäß a) in festem Zustand, zum Beispiel in Form eines Pulvers oder Granulats, bereitgestellt werden. Alternativ kann das Caprolactam in geschmolzenem Zustand bereitgestellt werden, wobei das Caprolactam bevorzugt bei einer Temperatur von mindestens 80 °C, weiter bevorzugt im Bereich von 100 bis 175 °C, weiter bevorzugt von 100 bis 160 °C, weiter bevorzugt von 110 bis 150 °C, geschmolzen wird.

Bevorzugt wird gemäß a) das Caprolactam in festem oder geschmolzenem Zustand, weiter bevorzugt in geschmolzenem Zustand bereitgestellt.

### Schritt b)

Die Alkylenreste des Alkylendiisocyanats gemäß (i), des Alkylendiols gemäß (ii) und des Polyalkylenethers gemäß (iii) unterliegen keiner besonderen Beschränkung und können jeweils grundsätzlich substituiert oder unsubstituiert sein. Beispielsweise sind die substituierten Alkylenreste bevorzugt mit mindestens einem Substituenten, weiter bevorzugt mit ein bis drei Substituenten, weiter bevorzugt mit einem Substituenten substituiert. Die Substituenten können verschieden oder identisch sein. Die Substituenten müssen sich unter den Bedingungen gemäß Schritt c) oder d) inert verhalten, weshalb zum Beispiel Alkylreste bevorzugt sind. Weiter bevorzugt sind C1-C6 Alkylreste, weiter bevorzugt C1-C3 Alkylreste.

Bevorzugt sind die Alkylenreste des Alkylendiisocyanats gemäß (i), des Alkylendiols gemäß (ii) und des Polyalkylenethers gemäß (iii) unsubstituiert.

Das Alkylendiisocyanat gemäß (i) ist bevorzugt ausgewählt aus der Gruppe bestehend aus C1-bis C20-Alkylendiisocyanaten und einem Gemisch aus zwei oder mehr davon, weiter bevorzugt aus der Gruppe bestehend aus C3- bis C18-Alkylendiisocyanaten und einem Gemisch aus zwei oder mehr davon, weiter bevorzugt aus der Gruppe bestehend aus C6- bis C13-Alkylendiisocyanaten und einem Gemisch aus zwei oder mehr davon, weiter bevorzugt aus der Gruppe bestehend aus 1,6-Hexamethylendiisocyanat (HDI), 4,4'-Diisocyanatodicyclohexylmethan (H12MDI), 1-Isocyana-to-3-isocyanatomethyl-3,5,5-trimethylcyclohexan (IPDI) und einem Gemisch aus zwei oder mehr davon.

Beispielsweise sind die C1- bis C20-Alkylendiisocyanate ausgewählt aus der Gruppe bestehend aus C1-, C2-, C3-, C4-, C5-, C6-, C7-, C8-, C9-, C10-, C11-, C12-, C13-, C14-, C15-, C16-, C17-, C18-, C19-, C20-Alkylendiiscocyanat und einem Gemisch aus zwei oder mehr davon, und die C6- bis C13-Alkylendiisocyanate sind ausgewählt aus der Gruppe bestehend aus C6-, C7-, C8-, C9-, C10-, C11-, C12-, C13-Alkylendiisocanat und einem Gemisch aus zwei oder mehr davon.

Das Alkylendiol gemäß (ii) ist bevorzugt ausgewählt aus der Gruppe bestehend aus C1- bis C20-Alkylendiolen und einem Gemisch aus zwei oder mehr davon, weiter bevorzugt aus der Gruppe bestehend aus C3- bis C8-Alkylendiolen und einem Gemisch aus zwei oder mehr davon, weiter bevorzugt aus der Gruppe bestehend aus C4- bis C6-Alkylendiolen und einem Gemisch aus zwei oder mehr davon, weiter bevorzugt aus der Gruppe bestehend aus 1,4-Butandiol, 1,6-Hexandiol und einem Gemisch davon.

Beispielsweise sind die C1- bis C20-Alkylendiole ausgewählt aus der Gruppe bestehend aus C1-, C2-, C3-, C4-, C5-, C6-, C7-, C8-, C9-, C10-, C11-, C12-, C13-, C14-, C15-, C16-, C17-, C18-, C19-, C20-Alkylendiol und einem Gemisch aus zwei oder mehr davon, und die C3- bis C8-Alkylendiole sind ausgewählt aus der Gruppe bestehend aus C3-, C4-, C5-, C6-, C7-, C8-Alkylendiol und einem Gemisch aus zwei oder mehr davon.

Der Polyalkylenether gemäß (iii) ist bevorzugt ausgewählt aus der Gruppe bestehend aus Poly(C1- bis C20-alkylen)ethern und einem Gemisch aus zwei oder mehr davon, weiter bevorzugt aus der Gruppe bestehend aus Poly(C2- bis C12-alkylen)ethern und einem Gemisch aus zwei oder mehr davon, weiter bevorzugt aus der Gruppe bestehend aus Poly(C2- bis C6-alkylen)ethern und einem Gemisch aus zwei oder mehr davon, wobei der Polyalkylenether gemäß (iii) weiter bevorzugt Polytetrahydrofuran ist.

Beispielsweise sind die Poly(C1- bis C20-alkylen)ether ausgewählt aus der Gruppe bestehend aus Poly(C1-alkylen)ether, Poly(C2-alkylen)ether, Poly(C3-alkylen)ether, Poly(C4-alkylen)ether, Poly(C5-alkylen)ether, Poly(C6-alkylen)ether, Poly(C7-alkylen)ether, Poly(C8-alkylen)ether, Poly(C9-alkylen)ether, Poly(C10-alkylen)ether, Poly(C11-alkylen)ether, Poly(C12-alkylen)ether, Poly(C13-alkylen)ether, Poly(C14-alkylen)ether, Poly(C15-alkylen)ether, Poly(C16-alkylen)ether, Poly(C17-alkylen)ether, Poly(C18-alkylen)ether, Poly(C19-alkylen)ether, Poly(C20-alkylen)ether und einem Gemisch aus zwei oder mehr davon, und die Poly(C2- bis C6-alkylen)ether sind ausgewählt aus der Gruppe bestehend aus Poly(C2-alkylen)ether, Poly(C3-alkylen)ether, Poly(C4-alkylen)ether, Poly(C5-alkylen)ether, Poly(C6-alkylen)ether und einem Gemisch aus zwei oder mehr davon.

Die für die jeweiligen Alkylenreste des Alkylendiisocyanats gemäß (i), des Alkylendiols gemäß (ii) und des Polyalkylenethers gemäß (iii) angegebene Anzahl der Kohlenstoffatome bezieht sich auf die Gesamtzahl der Kohlenstoffatome des Alkylenrests. So ist beispielsweise unter "C20-Alkylen" ein Alkylenrest zu verstehen, der 20 Kohlenstoffatome aufweist.

Bevorzugt weist der Polyalkylenether gemäß (iii) ein Zahlenmittel des Molekulargewichts (Mₙ) im Bereich von 300 bis 8.000 g, weiter bevorzugt von 600 bis 4.500 g, weiter bevorzugt von 800 bis 2.500 g auf.

Bevorzugt basiert das thermoplastische Polyurethan gemäß b) auf einem Alkylendiisocyanat gemäß (i) ausgewählt aus der Gruppe bestehend aus C1- bis C20-Alkylendiisocyanaten und einem Gemisch aus zwei oder mehr davon, einem Alkylendiol gemäß (ii) ausgewählt aus der Gruppe bestehend aus C1- bis C20-Alkylendiolen und einem Gemisch aus zwei oder mehr davon und einem Polyalkylenether gemäß (iii) mit einem Zahlenmittel des Molekulargewichts (Mₙ) im Bereich von 300 bis 8.000 g ausgewählt aus der Gruppe bestehend aus Poly(C1- bis C20-alkylen)ethern und einem Gemisch aus zwei oder mehr davon. Weiter bevorzugt basiert das thermoplastische Polyurethan gemäß b) auf einem Alkylendiisocyanat gemäß (i) ausgewählt aus der Gruppe bestehend aus C6- bis C13-Alkylendiisocyanaten und einem Gemisch aus zwei oder mehr davon, einem Alkylendiol gemäß (ii) ausgewählt aus der Gruppe bestehend aus C4- bis C6-Alkylendiolen und einem Gemisch aus zwei oder mehr davon und einem Polyalkylenether gemäß (iii) mit einem Zahlenmittel des Molekulargewichts (Mₙ) im Bereich von 600 bis 4.500 g ausgewählt aus der Gruppe bestehend aus Poly(C2- bis C6-alkylen)ethern. Weiter bevorzugt basiert das thermoplastische Polyurethan gemäß b) auf einem Alkylendiisocyanat gemäß (i) ausgewählt aus der Gruppe bestehend aus 1,6-Hexamethylendiisocyanat (HDI), 4,4'-Diisocyanato-dicyclohexylmethan (H12MDI), 1-Isocyanato-3-isocyanatomethyl-3,5,5-trimethylcyclohexan (IPDI) und einem Gemisch aus zwei oder mehr davon, einem Alkylendiol gemäß (ii) ausgewählt aus der Gruppe bestehend aus 1,4-Butandiol und 1,6-Hexandiol oder einem Gemisch davon und einem Polyalkylenether gemäß (iii) ausgewählt aus Polytetrahydrofuran mit einem Zahlenmittel des Molekulargewichts (Mₙ) im Bereich von 800 bis 2.500 g. Weiter bevorzugt basiert das thermoplastische Polyurethan gemäß b) auf (i) 1,6-Hexamethylendiisocyanat (HDI) oder 4,4'-Diisocyanatodicyclohexylmethan (H12MDI), (ii) 1,4-Butandiol oder 1,6-Hexandiol, und (iii) Polytetrahydrofuran mit einem Zahlenmittel des Molekulargewichts (Mₙ) im Bereich von 800 bis 2.500 g.

Bevorzugt weisen mindestens eine, weiter bevorzugt mindestens zwei, weiter bevorzugt sämtliche der Komponenten Alkylendiisocyanat (i), Alkylendiol (ii) und Polyalkylenether (iii) einen linearen und/oder cyclischen Alkylenrest auf. Weiter bevorzugt weist das Alkylendiisocyanat (i) einen linearen und/oder cyclischen Alkylenrest, das Alkylendiol (ii) einen linearen Alkylenrest und der Polyalkylenether (iii) einen linearen Alkylenrest auf.

Unter dem hier verwendeten Begriff "linearer und cyclischer Alkylenrest" ist ein Alkylenrest zu verstehen, welcher aus mindestens einem linearen und mindestens einem cyclischen Alkylenrest zusammengesetzt ist, wie zum Beispiel der Dicyclohexylmethanrest von 4,4'-Diisocyanatodicyclohexylmethan (H12MDI).

Das thermoplastische Polyurethan gemäß b) weist bevorzugt ein Zahlenmittel des Molekulargewichts (Mₙ) im Bereich von 10.000 bis 300.000 g, weiter bevorzugt von 15.000 bis 200.000 g, weiter bevorzugt von 19.000 bis 160.000 g auf.

Die Schmelztemperatur T₀ des thermoplastischen Polyurethans gemäß b) liegt bevorzugt im Bereich von 155 bis 280 °C, weiter bevorzugt von 160 bis 250 °C, weiter bevorzugt von 170 bis 230 °C.

### Schritt c)

Unter dem Begriff "flüssige Mischung", wie er gemäß c) verwendet wird, ist eine Mischung zu verstehen, in welcher das thermoplastische Polyurethan bei der Temperatur T₁ im geschmolzenen Caprolactam gelöst ist. Sollte die Temperatur T₁ größer oder gleich der Schmelztemperatur T₀ sein, so wird zumindest ein Teil des thermoplastischen Polyurethans aufgeschmolzen und liegt somit in flüssigem Zustand in der Mischung vor, ohne dass es eines Lösens durch das geschmolzene Caprolactam bedarf.

Das Herstellen der flüssigen Mischung gemäß c) unterliegt keiner besonderen Beschränkung. Es ist bevorzugt, dass T₁ kleiner oder gleich T₀. Weiter bevorzugt liegt T₁ im Bereich von 100 bis 175 °C, weiter bevorzugt von 100 bis 160 °C, weiter bevorzugt von 110 bis 150 °C. Somit kann die Mischung gemäß c) bei einer vorteilhaft niedrigen Temperatur T₁ bereitgestellt werden, welche sowohl einen verringerten Energieverbrauch für diesen Verfahrensschritt ermöglicht als auch die Entstehung von unerwünschten Nebenprodukten bereits vor dem Polymerisieren gemäß d) wirksam verhindert.

### Schritt d)

Überraschenderweise kann das Polymerisieren gemäß d) aufgrund der spezifischen chemischen Natur des aliphatischen thermoplastischen Polyurethans gemäß b) innerhalb eines breiten Temperaturbereichs für die Polymerisationstemperatur T₂ bei vorteilhaft hohen Polymerisationsgeschwindigkeiten durchgeführt werden. Bevorzugt liegt gemäß d) die Temperatur T₂ im Bereich von 100 bis 175 °C, weiter bevorzugt von 115 bis 170 °C, weiter bevorzugt von 130 bis 170 °C. Des Weiteren ist es bevorzugt, dass T₂ größer oder gleich T₁ ist, wobei die Temperaturdifferenz T₂ - T₁ weiter bevorzugt im Bereich von 0 bis 40 °C, weiter bevorzugt von 0 bis 30 °C, weiter bevorzugt von 0 bis 20 °C liegt.

Bevorzugt liegt die Temperatur T₂ im Bereich von 100 bis 175 °C, und die Temperaturdifferenz T₂ - T₁ liegt im Bereich von 0 bis 40 °C. Weiter bevorzugt liegt die Temperatur T₂ im Bereich von 130 bis 170 °C, und die Temperaturdifferenz T₂ - T₁ liegt im Bereich von 0 bis 20 °C. Alternativ ist es bevorzugt, dass die Temperatur T₂ im Bereich von 100 bis 175 °C liegt und T₁ im Bereich von 100 bis 175 °C liegt, weiter bevorzugt liegt die Temperatur T₂ im Bereich von 130 bis 170 °C und T₁ liegt im Bereich von 110 bis 150 °C.

Es wurde überraschend gefunden, dass das Polymerisieren gemäß d) mit einem Salz von Caprolactam als Polymerisationskatalysator mit einer vorteilhaft hohen Polymerisationsgeschwindigkeit durchgeführt werden kann. Daher ist der Polymerisationskatalysator gemäß d) bevorzugt ein Salz von Caprolactam, weiter bevorzugt ein Alkali- oder Erdalkalimetallsalz von Caprolactam, weiter bevorzugt ein Alkalimetallsalz von Caprolactam, weiter bevorzugt das Natriumsalz oder das Kaliumsalz von Caprolactam, weiter bevorzugt das Natriumsalz von Caprolactam.

Bevorzugt wird gemäß d) der Polymerisationskatalysator in einer Menge im Bereich von 0,2 bis 4 Gew.-%, bevorzugt von 0,4 bis 3,4 Gew.-%, weiter bevorzugt von 0,6 bis 3 Gew.-%, bezogen auf die Summe der Gewichte des Caprolactams und des thermoplastischen Polyurethans, zugegeben.

Optional wird gemäß d) zusätzlich ein Polymerisationsaktivator zugegeben. Der Polymerisationsaktivator ist bevorzugt ausgewählt aus der Gruppe bestehend aus mit einer Carbonylgruppe N-substituierten Lactamen, aliphatischen und aromatischen Diisocyanaten, Allophanaten, Polyisocyanaten, aliphatischen und aromatischen Disäurehalogeniden, und einem Gemisch aus zwei oder mehr davon. Weiter bevorzugt ist der Polymerisationsaktivator ausgewählt aus der Gruppe bestehend aus N,N'-C1- bis N,N'-C20-alkylendicarbamoylcaprolactamen, N-Acetyl C3-C10 Lactamen, C2-C16 Alkylendiisocyanaten, C5-C12 Arylendiisocyanaten oder C5-C16 Arylenalkylendiisocyanaten, C1-C6 Alkylenallophanaten, C12-C24 Alkylenpolyisocyanaten, C2-C16 Alkylendisäurehalogeniden, C5-C12 Arylendisäurehalogeniden, C5-C16 Arylenalkylendisäurehalogeniden, und einem Gemisch aus zwei oder mehr davon. Weiter bevorzugt ist der Polymerisationsaktivator ausgewählt aus der Gruppe bestehend aus N,N'-C3- bis N,N'-C8-Alkylendicarbamoylcaprolactamen, N-Acetyl C4-C8 Lactamen, C4-C13 Alkylendiisocyanaten, C6-C10 Arylendiisocyanaten oder C7-C10 Arylenalkylendiisocyanaten, C2-C4 Alkylenallophanaten, C16-C20 Alkylenpolyisocyanaten, C4-C13 Alkylendisäurehalogeniden, C6-C10 Arylendisäurehalogeniden, C8-C12 Arylenalkylendisäurehalogeniden, und einem Gemisch aus zwei oder mehr davon. Weiter bevorzugt ist der Polymerisationsaktivator ausgewählt aus der Gruppe bestehend aus N,N'-Hexamethylen-1,6-dicarbamoylcaprolactam, Acetylcaprolactam, Butylendiisocyanat, Hexamethylendiisocyanat, Methylenbis(cyclohexylisocyanat); Toluyldiisocyanat, Ethylallophanat, Trimervon 1,6-Hexamethylendiisocyanat (HDI), Butylendisäurebromid, Hexamethylendisäurechlorid, 4,4'-Methylenbis(cyclohexylsäurechlorid, Toluylmethylendisäurechlorid, und einem Gemisch aus zwei oder mehr davon.

Die für die Lactam-, Alkylen-, Arylen- und Arylenalkylenreste des Polymerisationsaktivators angegebene Anzahl der Kohlenstoffatome bezieht sich auf die Gesamtzahl der Kohlenstoffatome des jeweiligen Lactam-, Alkylen-, Arylen- und Arylenalkylenrests. So ist beispielsweise unter "C16-Alkylen" ein Alkylenrest zu verstehen, der 16 Kohlenstoffatome aufweist, und unter "C10 Lactam" ist ein Lactamrest zu verstehen, der 10 Kohlenstoffatome aufweist.

Unter dem Begriff "Arylenalkylen" ist ein aus mindestens einer Arylengruppe und mindestens einer Alkylengruppe bestehender Rest zu verstehen. Der "Arylenalkylen"-Rest unterliegt keiner besonderen Beschränkung. Beispielsweise sind C13-Arylenalkylen-Reste bevorzugt ausgewählt aus Diphenylmethanen, wie zum Beispiel 2,2'-Diphenylmethan, 2,4'-Diphenylmethan oder 4,4'-Diphenylmethan.

Bevorzugt ist der Polymerisationsaktivator aus der Gruppe bestehend aus den N,N'-Alkylendicarbamoylcaprolactamen und einem Gemisch aus zwei oder mehr davon ausgewählt. Weiter bevorzugt ist der Polymerisationsaktivator ausgewählt aus der Gruppe bestehend aus N,N'-C1- bis N,N'-C20-alkylendicarbamoylcaprolactamen und einem Gemisch aus zwei oder mehr davon, weiter bevorzugt aus der Gruppe bestehend aus N,N'-C2- bis N,N'-C12-alkylendicarbamoylcaprolactamen und einem Gemisch aus zwei oder mehr davon, weiter bevorzugt aus der Gruppe bestehend aus N,N'-C3- bis N,N'-C8-alkylendicarbamoylcaprolactamen und einem Gemisch aus zwei oder mehr davon. Weiter bevorzugt ist der Polymerisationsaktivator N,N'-Hexamethylen-1,6-dicarbamoylcaprolactam.

Bevorzugt wird der Polymerisationsaktivator gemäß d) in einer Menge im Bereich von 0,5 bis 15 Gew.-%, weiter bevorzugt von 1 bis 12 Gew.-%, weiter bevorzugt von 2 bis 9 Gew.-%, bezogen auf die Summe der Gewichte des Caprolactams und des thermoplastischen Polyurethans, zugegeben.

Es wurde überraschend gefunden, dass sich die mechanischen Eigenschaften des gemäß d) erhaltenen thermoplastischen Copolymers durch Wahl des Massenverhältnisses von Caprolactam zu thermoplastischem Polyurethan in vorteilhafter Weise einstellen lassen. Bevorzugt wird gemäß d) der Polymerisationskatalysator zur flüssigen Mischung gemäß c) zugegeben, so dass eine Mischung enthaltend das Caprolactam und das thermoplastische Polyurethan in einem Massenverhältnis von Caprolactam zu thermoplastischem Polyurethan im Bereich von 7:3 bis 1:3, weiter bevorzugt von 2:1 bis 3:7, weiter bevorzugt von 16:9 bis 9:16 erhalten wird.

Das gemäß d) erhaltene thermoplastische Copolymer weist bevorzugt einen Gehalt von nicht copolymerisiertem Lactam von höchstens 10 Gew.-%, weiter bevorzugt von höchstens 7 Gew.-%, weiter bevorzugt von höchstens 5 Gew.-%, bezogen auf die Summe der Gewichte des thermoplastischen Copolymers und des nicht copolymerisierten Lactams, auf.

Bevorzugt ist ein Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
   (i) einem C3- bis C18-Alkylendiisocyanat;
   (ii) einem C3- bis C8-Alkylendiol; und
   (iii) einem Poly(C2- bis C6-alkylen)ether mit einem Zahlenmittel des Molekulargewichts (Mₙ) im Bereich von 600 bis 4.500 g
      basierenden Polyurethans mit einer Schmelztemperatur T₀ im Bereich von 160 bis 250 °C;
c) Herstellen einer flüssigen Mischung einer Temperatur T₁ im Bereich von 100 bis 175 °C enthaltend das Caprolactam und das thermoplastische Polyurethan;
d) Zugeben eines Alkali- oder Erdalkalimetallsalzes von Caprolactam als Polymerisationskatalysator in einer Menge im Bereich von 0,4 bis 3,4 Gew.-%, bezogen auf die Summe der Gewichte des Caprolactams und des thermoplastischen Polyurethans, zur flüssigen Mischung gemäß c) unter Erhalt einer Mischung enthaltend das Caprolactam und das thermoplastische Polyurethan in einem Massenverhältnis von Caprolactam zu thermoplastischem Polyurethan im Bereich von 3:1 bis 1:4, und Polymerisieren bei einer Temperatur T₂ im Bereich von 100 bis 175 °C unter Erhalt des thermoplastischen Copolymers.

Bevorzugt ist ein Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
   (i) einem C3- bis C18-Alkylendiisocyanat;
   (ii) einem C3- bis C8-Alkylendiol; und
   (iii) einem Poly(C2- bis C6-alkylen)ether mit einem Zahlenmittel des Molekulargewichts (Mₙ) im Bereich von 600 bis 4.500 g
      basierenden Polyurethans mit einer Schmelztemperatur T₀ im Bereich von 160 bis 250 °C;
c) Herstellen einer flüssigen Mischung einer Temperatur T₁ im Bereich von 100 bis 175 °C enthaltend das Caprolactam und das thermoplastische Polyurethan;
d) Zugeben eines Alkali- oder Erdalkalimetallsalzes von Caprolactam als Polymerisationskatalysator in einer Menge im Bereich von 0,4 bis 3,4 Gew.-%, bezogen auf die Summe der Gewichte des Caprolactams und des thermoplastischen Polyurethans, zur flüssigen Mischung gemäß c) unter Erhalt einer Mischung enthaltend das Caprolactam und das thermoplastische Polyurethan in einem Massenverhältnis von Caprolactam zu thermoplastischem Polyurethan im Bereich von 3:1 bis 1:4, und Polymerisieren bei einer Temperatur T₂ im Bereich von 100 bis 175 °C unter Erhalt des thermoplastischen Copolymers,
wobei gemäß d) zusätzlich ein Polymerisationsaktivator ausgewählt aus der Gruppe bestehend aus N,N'-C2- bis N,N'-C12-alkylendicarbamoylcaprolactamen und einem Gemisch aus zwei oder mehr davon in einer Menge im Bereich von 1 bis 12 Gew.-%, bezogen auf die Summe der Gewichte des Caprolactams und des thermoplastischen Polyurethans, zugegeben wird.

In dem erfindungsgemäßen Verfahren kann das Herstellen gemäß c) und das Zugeben und Polymerisieren gemäß d) als diskontinuierliches oder kontinuierliches Verfahren ausgeführt werden.

### Diskontinuierliche Verfahrensführung

Das erfindungsgemäße Verfahren kann als diskontinuierliches Verfahren durchgeführt werden, wobei das Herstellen gemäß c) und das Zugeben und Polymerisieren gemäß d) als diskontinuierliches Verfahren durchgeführt werden, und wobei gemäß a) das Caprolactam im geschmolzenen Zustand und gemäß b) das thermoplastische Polyurethan im festen Zustand bereitgestellt werden, und die flüssige Mischung gemäß c) durch Zugabe des thermoplastischen Polyurethans zu Caprolactam im geschmolzenen Zustand bereitgestellt wird.

In diesem diskontinuierlichen Verfahren ist es bevorzugt, dass die Mischung gemäß c) für einen Zeitraum im Bereich von 1 min bis 1,5 h, weiter bevorzugt von 10 min bis 70 min, weiter bevorzugt von 20 min bis 60 min bei der Temperatur T₁ gehalten wird.

Es wurde überraschend gefunden, dass sich dieses diskontinuierliche Verfahren besonders dazu eignet, das Polymerisieren gemäß d) in einer Form unter Erhalt eines Formkörpers durchzuführen, wenn der Polymerisationskatalysator in Form einer flüssigen Mischung enthaltend Polymerisationskatalysator und Caprolactam zugegeben wird. Daher ist es bevorzugt, dass gemäß d) der Polymerisationskatalysator in Form einer flüssigen Mischung enthaltend Polymerisationskatalysator und Caprolactam zugegeben wird.

Unter dem Begriff "flüssige Mischung enthaltend Polymerisationskatalysator und Caprolactam" ist eine Mischung zu verstehen, in welcher der Polymerisationskatalysator in geschmolzenem, flüssigem Caprolactam gelöst oder dispergiert ist.

Bevorzugt wird diese flüssige Mischung enthaltend Polymerisationskatalysator und Caprolactam durch Zugabe des Polymerisationskatalysators zu Caprolactam im geschmolzenen Zustand bereitgestellt.

Die flüssige Mischung enthaltend Polymerisationskatalysator und Caprolactam enthält den Polymerisationskatalysator bevorzugt in einer Menge im Bereich von 2 bis 40 Gew.-%, weiter bevorzugt von 4 bis 34 Gew.-%, weiter bevorzugt von 6 bis 30 Gew.-%, bezogen auf das Gewicht des Caprolactams.

Bevorzugt wird die flüssige Mischung enthaltend Polymerisationskatalysator und Caprolactam für einen Zeitraum im Bereich von 1 min bis 1,5 h, weiter bevorzugt von 10 min bis 70 min, weiter bevorzugt von 20 bis 60 min bei der Temperatur T₃ gehalten.

Die Temperatur T₃ unterliegt generell keinen Beschränkungen. Bevorzugt liegt T₃ im Bereich von 100 bis 175 °C, weiter bevorzugt von 105 bis 155 °C, weiter bevorzugt von 110 bis 130 °C.

Gemäß d) kann optional zusätzlich ein Polymerisationsaktivator zugegeben werden, wobei der Polymerisationsaktivator bevorzugt der Mischung gemäß c) zugegeben wird. Bevorzugt wird der Polymerisationsaktivator der Mischung gemäß c) in einer Menge im Bereich von 1 bis 30 Gew.-%, weiter bevorzugt von 2 bis 24 Gew.-%, weiter bevorzugt von 4 bis 18 Gew.-%, bezogen auf die Summe der Gewichte des Caprolactams und des thermoplastischen Polyurethans, zugegeben.

Bevorzugt werden gemäß d) die flüssige Mischung enthaltend Polymerisationskatalysator und Caprolactam zur flüssigen Mischung gemäß c) in einem Massenverhältnis von Mischung enthaltend Polymerisationskatalysator und Caprolactam zu Mischung gemäß c) im Bereich von 1:4 bis 3:1, weiter bevorzugt von 1:3 bis 2:1, weiter bevorzugt von 1:1,5 bis 1,5:1 gemischt. Die flüssige Mischung enthaltend Polymerisationskatalysator und Caprolactam und die flüssige Mischung gemäß c) werden bevorzugt bei einer Temperatur T₄ gemischt. Bevorzugt liegt die Temperatur T₄ im Bereich von 100 bis 175 °C, weiter bevorzugt von 105 bis 155 °C, weiter bevorzugt von 110 bis 130 °C.

Bevorzugt wird das Polymerisieren gemäß d) für einen Zeitraum im Bereich von 0,1 bis 20 min, weiter bevorzugt von 0,3 bis 10 min, weiter bevorzugt von 0,5 bis 3 min durchgeführt.

Bevorzugt wird in dem oben beschriebenen diskontinuierlichen Verfahren gemäß d) in einer Form polymerisiert, weiter bevorzugt in einer Reaction Injection Molding (RIM) Form.

Bevorzugt ist ein Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
   (i) einem C3- bis C18-Alkylendiisocyanat;
   (ii) einem C3- bis C8-Alkylendiol; und
   (iii) einem Poly(C2- bis C6-alkylen)ether mit einem Zahlenmittel des Molekulargewichts (Mₙ) im Bereich von 600 bis 4.500 g
      basierenden Polyurethans mit einer Schmelztemperatur T₀ im Bereich von 160 bis 250 °C;
c) Herstellen einer flüssigen Mischung einer Temperatur T₁ im Bereich von 100 bis 160 °C enthaltend das Caprolactam und das thermoplastische Polyurethan;
d) Zugeben eines Alkali- oder Erdalkalimetallsalzes von Caprolactam als Polymerisationskatalysator in einer Menge im Bereich von 0,4 bis 3,4 Gew.-%, bezogen auf die Summe der Gewichte des Caprolactams und des thermoplastischen Polyurethans, zur flüssigen Mischung gemäß c) unter Erhalt einer Mischung enthaltend das Caprolactam und das thermoplastische Polyurethan in einem Massenverhältnis von Caprolactam zu thermoplastischem Polyurethan im Bereich von 3:1 bis 1:4, und Polymerisieren bei einer Temperatur T₂ im Bereich von 115 bis 170 °C unter Erhalt des thermoplastischen Copolymers, wobei das Polymerisieren gemäß d) für einen Zeitraum im Bereich von 0,3 bis 10 min durchgeführt wird,
wobei das Herstellen gemäß c) und das Zugeben und Polymerisieren gemäß d) als diskontinuierliches Verfahren durchgeführt werden, und wobei gemäß a) das Caprolactam im geschmolzenen Zustand und gemäß b) das thermoplastische Polyurethan im festen Zustand bereitgestellt werden, und die flüssige Mischung gemäß c) durch Zugabe des thermoplastischen Polyurethans zu Caprolactam im geschmolzenen Zustand bereitgestellt wird.

Alternativ kann das vorliegende Verfahren als diskontinuierliches Verfahren durchgeführt werden, in welchem das Herstellen gemäß c) und das Zugeben und Polymerisieren gemäß d) als diskontinuierliches Verfahren durchgeführt werden, wobei gemäß a) das Caprolactam im festen Zustand und gemäß b) das thermoplastische Polyurethan im festen Zustand bereitgestellt werden und gemäß c) das Caprolactam und das thermoplastische Polyurethan durch Kneten gemischt werden und die erhaltene Mischung auf T₁ erwärmt wird. Bei dieser alternativen diskontinuierlichen Verfahrensführung ist es bevorzugt, dass die Mischung gemäß c) für einen Zeitraum im Bereich von 0,1 bis 20 min, weiter bevorzugt von 0,3 min bis 16 min, weiter bevorzugt von 0,5 bis 12 min bei T₁ gehalten wird.

Besonders bevorzugt ist ein Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
   (i) einem C3- bis C18-Alkylendiisocyanat;
   (ii) einem C3- bis C8-Alkylendiol; und
   (iii) einem Poly(C2- bis C6-alkylen)ether mit einem Zahlenmittel des Molekulargewichts (Mₙ) im Bereich von 600 bis 4.500 g
      basierenden Polyurethans mit einer Schmelztemperatur T₀ im Bereich von 160 bis 250 °C;
c) Herstellen einer flüssigen Mischung einer Temperatur T₁ im Bereich von 100 bis 175 °C enthaltend das Caprolactam und das thermoplastische Polyurethan;
d) Zugeben eines Alkali- oder Erdalkalimetallsalzes von Caprolactam als Polymerisationskatalysator in einer Menge im Bereich von 0,4 bis 3,4 Gew.-%, bezogen auf die Summe der Gewichte des Caprolactams und des thermoplastischen Polyurethans, zur flüssigen Mischung gemäß c) unter Erhalt einer Mischung enthaltend das Caprolactam und das thermoplastische Polyurethan in einem Massenverhältnis von Caprolactam zu thermoplastischem Polyurethan im Bereich von 3:1 bis 1:4, und Polymerisieren bei einer Temperatur T₂ im Bereich von 100 bis 175 °C unter Erhalt des thermoplastischen Copolymers, wobei das Polymerisieren gemäß d) für einen Zeitraum im Bereich von 0,1 bis 20 min durchgeführt wird,
wobei das Herstellen gemäß c) und das Zugeben und Polymerisieren gemäß d) als diskontinuierliches Verfahren durchgeführt werden, und wobei gemäß a) das Caprolactam im festen Zustand und gemäß b) das thermoplastische Polyurethan im festen Zustand bereitgestellt werden und gemäß c) das Caprolactam und das thermoplastische Polyurethan durch Kneten gemischt werden und die erhaltene Mischung auf T₁ erwärmt wird.

Überraschenderweise ermöglichen die erfindungsgemäßen diskontinuierlichen Verfahrensführungen eine im Vergleich zu herkömmlichen Copolymerisationsverfahren zur Herstellung von auf Polycaprolactam und einem thermoplastischen Polyurethan basierenden Copolymeren eine höhere Polymerisationsgeschwindigkeit, welche vorteilhafterweise selbst bei einer niedrigen Polymerisationstemperatur T₂ von zum Beispiel ca. 140 °C realisiert werden kann. Somit kann der Polymerisationsschritt d) innerhalb eines vorteilhaft kurzen Zeitraums durchgeführt werden, was zu einem besonders energie- und zeiteffizienten Verfahren beiträgt.

### Kontinuierliche Verfahrensführung

Das erfindungsgemäße Verfahren kann alternativ als kontinuierliches Verfahren durchgeführt werden, in welchem das Herstellen gemäß c) und das Zugeben und Polymerisieren gemäß d) bevorzugt als kontinuierliches Verfahren umfassend ein Extrusionsverfahren durchgeführt werden, wobei das Herstellen gemäß c) außerhalb des für das Extrusionsverfahren verwendeten Extruders durchgeführt wird, die gemäß c) hergestellte Mischung dem für das Extrusionsverfahren verwendeten Extruder zugeführt wird und das Polymerisieren gemäß d) innerhalb des Extruders durchgeführt wird. Hierbei ist es bevorzugt, dass gemäß a) das Caprolactam im festen Zustand und gemäß b) das thermoplastische Polyurethan im festen Zustand bereitgestellt werden und gemäß c) das Caprolactam und das thermoplastische Polyurethan durch Kneten im Extruder gemischt werden und die erhaltene Mischung auf T₁ erwärmt wird. Bevorzugt wird die Mischung gemäß c) für einen Zeitraum im Bereich von 5 min bis 3 h, weiter bevorzugt von 10 min bis 2 h, weiter bevorzugt von 20 min bis 1 h bei T₁ gehalten.

Der Polymerisationskatalysator wird bevorzugt in mindestens einer ersten Zone des Extruders zugeführt und die Mischung gemäß c) wird in mindestens einer zweiten Zone des Extruders zugeführt, wobei die mindestens eine zweite Zone der mindestens einen ersten Zone nachgeschaltet ist.

Optional kann gemäß d) zusätzlich ein Polymerisationsaktivator zugegeben werden. Der Polymerisationsaktivator kann grundsätzlich an jeder geeigneten Stelle inner- oder außerhalb des Extruders zugegeben werden. Beispielsweise kann der Polymerisationsaktivator zu einer außerhalb des Extruders hergestellten Mischung gemäß c) oder zu einer innerhalb des Extruders hergestellten Mischung gemäß c) vor oder nach Zugeben des Polymerisationskatalysators gemäß d) zugegeben werden. Bevorzugt wird der Polymerisationsaktivator zu der außerhalb des Extruders hergestellten Mischung gemäß c) zugegeben.

Bevorzugt ist ein Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
   (i) einem C3- bis C18-Alkylendiisocyanat;
   (ii) einem C3- bis C8-Alkylendiol; und
   (iii) einem Poly(C2- bis C6-alkylen)ether mit einem Zahlenmittel des Molekulargewichts (Mₙ) im Bereich von 600 bis 4.500 g
      basierenden Polyurethans mit einer Schmelztemperatur T₀ im Bereich von 160 bis 250 °C;
c) Herstellen einer flüssigen Mischung einer Temperatur T₁ im Bereich von 100 bis 160 °C enthaltend das Caprolactam und das thermoplastische Polyurethan;
d) Zugeben eines Alkali- oder Erdalkalimetallsalzes von Caprolactam als Polymerisationskatalysator in einer Menge im Bereich von 0,4 bis 3,4 Gew.-%, bezogen auf die Summe der Gewichte des Caprolactams und des thermoplastischen Polyurethans, zur flüssigen Mischung gemäß c) unter Erhalt einer Mischung enthaltend das Caprolactam und das thermoplastische Polyurethan in einem Massenverhältnis von Caprolactam zu thermoplastischem Polyurethan im Bereich von 3:1 bis 1:4, und Polymerisieren bei einer Temperatur T₂ im Bereich von 100 bis 175 °C unter Erhalt des thermoplastischen Copolymers, wobei das Polymerisieren gemäß d) für einen Zeitraum im Bereich von 1 bis 6 min durchgeführt wird,
wobei das Herstellen gemäß c) und das Zugeben und Polymerisieren gemäß d) als kontinuierliches Verfahren umfassend ein Extrusionsverfahren durchgeführt werden, wobei das Herstellen gemäß c) außerhalb des für das Extrusionsverfahren verwendeten Extruders durchgeführt wird, die gemäß c) hergestellte Mischung dem für das Extrusionsverfahren verwendeten Extruder zugeführt wird und das Polymerisieren gemäß d) innerhalb des Extruders durchgeführt wird.

Bevorzugt ist ein Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
   (i) einem C3- bis C18-Alkylendiisocyanat;
   (ii) einem C3- bis C8-Alkylendiol; und
   (iii) einem Poly(C2- bis C6-alkylen)ether mit einem Zahlenmittel des Molekulargewichts (Mₙ) im Bereich von 600 bis 4.500 g
      basierenden Polyurethans mit einer Schmelztemperatur T₀ im Bereich von 160 bis 250 °C;
c) Herstellen einer flüssigen Mischung einer Temperatur T₁ im Bereich von 100 bis 160 °C enthaltend das Caprolactam und das thermoplastische Polyurethan;
d) Zugeben eines Alkali- oder Erdalkalimetallsalzes von Caprolactam als Polymerisationskatalysator in einer Menge im Bereich von 0,4 bis 3,4 Gew.-%, bezogen auf die Summe der Gewichte des Caprolactams und des thermoplastischen Polyurethans, zur flüssigen Mischung gemäß c) unter Erhalt einer Mischung enthaltend das Caprolactam und das thermoplastische Polyurethan in einem Massenverhältnis von Caprolactam zu thermoplastischem Polyurethan im Bereich von 3:1 bis 1:4, und Polymerisieren bei einer Temperatur T₂ im Bereich von 100 bis 175 °C unter Erhalt des thermoplastischen Copolymers, wobei das Polymerisieren gemäß d) für einen Zeitraum im Bereich von 1 bis 6 min durchgeführt wird,
wobei das Herstellen gemäß c) und das Zugeben und Polymerisieren gemäß d) als kontinuierliches Verfahren umfassend ein Extrusionsverfahren durchgeführt werden, wobei das Herstellen gemäß c) außerhalb des für das Extrusionsverfahren verwendeten Extruders durchgeführt wird, die gemäß c) hergestellte Mischung dem für das Extrusionsverfahren verwendeten Extruder zugeführt wird und das Polymerisieren gemäß d) innerhalb des Extruders durchgeführt wird,
wobei gemäß d) zusätzlich ein Polymerisationsaktivator ausgewählt aus der Gruppe bestehend aus N,N'-C2- bis N,N'-C12-alkylendicarbamoylcaprolactamen und einem Gemisch aus zwei oder mehr davon in einer Menge im Bereich von 1 bis 12 Gew.-%, bezogen auf die Summe der Gewichte des Caprolactams und des thermoplastischen Polyurethans, zu der außerhalb des Extruders hergestellten Mischung gemäß c) zugegeben wird.

Alternativ kann das vorliegende Verfahren als kontinuierliches Verfahren durchgeführt werden, in welchem das Herstellen gemäß c) und das Zugeben und Polymerisieren gemäß d) als kontinuierliches Verfahren umfassend ein Extrusionsverfahren durchgeführt werden, wobei das Herstellen gemäß c) und das Polymerisieren gemäß d) innerhalb des für das Extrusionsverfahren verwendeten Extruders durchgeführt werden.

Bei dieser alternativen kontinuierlichen Verfahrensführung ist es bevorzugt, dass gemäß a) das Caprolactam im flüssigen Zustand und gemäß b) das thermoplastische Polyurethan im festen Zustand bereitgestellt werden und das Caprolactam im flüssigen Zustand und das thermoplastische Polyurethan im festen Zustand dem Extruder zugeführt werden.

Bei dieser alternativen kontinuierlichen Verfahrensführung wird das thermoplastische Polyurethan bevorzugt in mindestens einer ersten Zone des Extruders bei einer Temperatur größer oder gleich T₀ in den flüssigen Zustand gebracht. Des Weiteren ist es bevorzugt, dass in mindestens einer zweiten Zone des Extruders, welche der mindestens einen ersten Zone des Extruders nachgeschaltet ist, das Caprolactam unter Erhalt der Mischung gemäß c) zu geführt wird. Zudem wird vorzugsweise in mindestens einer dritten Zone des Extruders, welche der mindestens einen zweiten Zone des Extruders nachgeschaltet ist, der Polymerisationskatalysator zugeführt und gemäß d) polymerisiert.

Optional kann bei dieser alternativen kontinuierlichen Verfahrensführung gemäß d) zusätzlich ein Polymerisationsaktivator zugegeben werden, wobei der Polymerisationsaktivator als Mischung mit Caprolactam in einer zweiten Zone des Extruders zugeführt wird.

Besonders bevorzugt ist ein Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
   (i) einem C3- bis C18-Alkylendiisocyanat;
   (ii) einem C3- bis C8-Alkylendiol; und
   (iii) einem Poly(C2- bis C6-alkylen)ether mit einem Zahlenmittel des Molekulargewichts (Mₙ) im Bereich von 600 bis 4.500 g
      basierenden Polyurethans mit einer Schmelztemperatur T₀ im Bereich von 160 bis 250 °C;
c) Herstellen einer flüssigen Mischung einer Temperatur T₁ im Bereich von 100 bis 160 °C enthaltend das Caprolactam und das thermoplastische Polyurethan;
d) Zugeben eines Alkali- oder Erdalkalimetallsalzes von Caprolactam als Polymerisationskatalysator zur flüssigen Mischung gemäß c) unter Erhalt einer Mischung enthaltend das Caprolactam und das thermoplastische Polyurethan in einem Massenverhältnis von Caprolactam zu thermoplastischem Polyurethan im Bereich von 3:1 bis 1:4, und Polymerisieren bei einer Temperatur T₂ im Bereich von 100 bis 175 °C unter Erhalt des thermoplastischen Copolymers, wobei das Polymerisieren gemäß d) für einen Zeitraum im Bereich von 1 bis 6 min durchgeführt wird,
wobei das Herstellen gemäß c) und das Zugeben und Polymerisieren gemäß d) als kontinuierliches Verfahren umfassend ein Extrusionsverfahren durchgeführt werden, wobei das Herstellen gemäß c) und das Polymerisieren gemäß d) innerhalb des für das Extrusionsverfahren verwendeten Extruders durchgeführt werden.

Überraschenderweise ermöglichen die erfindungsgemäßen kontinuierlichen Verfahrensführungen eine im Vergleich zu herkömmlichen Copolymerisationsverfahren zur Herstellung von auf Polycaprolactam und einem thermoplastischen Polyurethan basierenden Copolymeren eine höhere Polymerisationsgeschwindigkeit, welche vorteilhafterweise selbst bei einer niedrigen Polymerisationstemperatur T₂ von ca. 140 °C realisiert werden kann. Daher wird das Polymerisieren gemäß d) bevorzugt für einen Zeitraum im Bereich von 0,5 bis 10 min, weiter bevorzugt 1 bis 6 min, weiter bevorzugt 1,5 bis 4 min durchgeführt. Somit kann der Polymerisationsschritt d) innerhalb eines vorteilhaft kurzen Zeitraums durchgeführt werden, was zu einem besonders energie- und zeiteffizienten Verfahren beiträgt.

Die beiden oben beschriebenen kontinuierlichen Verfahren umfassen bevorzugt zusätzlich einen Verfahrensschritt e), in welchem das gemäß d) erhaltene Copolymer granuliert wird. Des Weiteren umfassen die beiden oben beschriebenen kontinuierlichen Verfahren bevorzugt zusätzlich einen Verfahrensschritt f), in welchem das gemäß d) erhaltenen Copolymer getempert wird, weiter bevorzugt wird das gemäß d) erhaltene und gemäß e) granulierte Copolymer getempert. Das Tempern gemäß f) erfolgt bevorzugt bei einer Temperatur im Bereich von 60 bis 170 °C, weiter bevorzugt von 90 bis 150 °C, weiter bevorzugt von 100 bis 130 °C.

### Thermoplastisches Copolymer

Die Alkylenreste des Alkylendiisocyanats gemäß (i), des Alkylendiols gemäß (ii) und des Polyalkylenethers gemäß (iii) unterliegen keiner besonderen Beschränkung und können jeweils grundsätzlich substituiert oder unsubstituiert sein. Beispielsweise sind die substituierten Alkylenreste bevorzugt mit mindestens einem Substituenten, weiter bevorzugt mit ein bis drei Substituenten, weiter bevorzugt mit einem Substituenten substituiert. Die Substituenten können verschieden oder identisch sein. Die Substituenten müssen sich unter den Bedingungen gemäß Schritt c) oder d) inert verhalten, weshalb zum Beispiel Alkylreste bevorzugt sind. Weiter bevorzugt sind C1-C6 Alkylreste, weiter bevorzugt C1-C3 Alkylreste.

Bevorzugt sind die Alkylenreste des Alkylendiisocyanats gemäß (i), des Alkylendiols gemäß (ii) und des Polyalkylenethers gemäß (iii) unsubstituiert.

Das Alkylendiisocyanat gemäß (i) ist bevorzugt ausgewählt aus der Gruppe bestehend aus C1-bis C20-Alkylendiisocyanaten und einem Gemisch aus zwei oder mehr davon, weiter bevorzugt aus der Gruppe bestehend aus C3- bis C18-Alkylendiisocyanaten und einem Gemisch aus zwei oder mehr davon, weiter bevorzugt aus der Gruppe bestehend aus C6- bis C13-Alkylendiisocyanaten und einem Gemisch aus zwei oder mehr davon, weiter bevorzugt aus der Gruppe bestehend aus 1,6-Hexamethylendiisocyanat (HDI), 4,4'-Diisocyanatodicyclohexylmethan (H12MDI), 1-Isocyana-to-3-isocyanatomethyl-3,5,5-trimethylcyclohexan (IPDI) und einem Gemisch aus zwei oder mehr davon.

Beispielsweise sind die C1- bis C20-Alkylendiisocyanate ausgewählt aus der Gruppe bestehend aus C1-, C2-, C3-, C4-, C5-, C6-, C7-, C8-, C9-, C10-, C11-, C12-, C13-, C14-, C15-, C16-, C17-, C18-, C19-, C20-Alkylendiiscocyanat und einem Gemisch aus zwei oder mehr davon, und die C6- bis C13-Alkylendiisocyanate sind ausgewählt aus der Gruppe bestehend aus C6-, C7-, C8-, C9-, C10-, C11-, C12-, C13-Alkylendiisocanat und einem Gemisch aus zwei oder mehr davon.

Das Alkylendiol gemäß (ii) ist bevorzugt ausgewählt aus der Gruppe bestehend aus C1- bis C20-Alkylendiolen und einem Gemisch aus zwei oder mehr davon, weiter bevorzugt aus der Gruppe bestehend aus C3- bis C8-Alkylendiolen und einem Gemisch aus zwei oder mehr davon, weiter bevorzugt aus der Gruppe bestehend aus C4- bis C6-Alkylendiolen und einem Gemisch aus zwei oder mehr davon, weiter bevorzugt aus der Gruppe bestehend aus 1,4-Butandiol, 1,6-Hexandiol und einem Gemisch davon.

Beispielsweise sind die C1- bis C20-Alkylendiole ausgewählt aus der Gruppe bestehend aus C1-, C2-, C3-, C4-, C5-, C6-, C7-, C8-, C9-, C10-, C11-, C12-, C13-, C14-, C15-, C16-, C17-, C18-, C19-, C20-Alkylendiol und einem Gemisch aus zwei oder mehr davon, und die C3- bis C8-Alkylendiole sind ausgewählt aus der Gruppe bestehend aus C3-, C4-, C5-, C6-, C7-, C8-Alkylendiol und einem Gemisch aus zwei oder mehr davon.

Der Polyalkylenether gemäß (iii) ist bevorzugt ausgewählt aus der Gruppe bestehend aus Poly(C1- bis C20-alkylen)ethern und einem Gemisch aus zwei oder mehr davon, weiter bevorzugt aus der Gruppe bestehend aus Poly(C2- bis C12-alkylen)ethern und einem Gemisch aus zwei oder mehr davon, weiter bevorzugt aus der Gruppe bestehend aus Poly(C2- bis C6-alkylen)ethern und einem Gemisch aus zwei oder mehr davon, wobei der Polyalkylenether gemäß (iii) weiter bevorzugt Polytetrahydrofuran ist.

Beispielsweise sind die Poly(C1- bis C20-alkylen)ether ausgewählt aus der Gruppe bestehend aus Poly(C1-alkylen)ether, Poly(C2-alkylen)ether, Poly(C3-alkylen)ether, Poly(C4-alkylen)ether, Poly(C5-alkylen)ether, Poly(C6-alkylen)ether, Poly(C7-alkylen)ether, Poly(C8-alkylen)ether, Poly(C9-alkylen)ether, Poly(C10-alkylen)ether, Poly(C11-alkylen)ether, Poly(C12-alkylen)ether, Poly(C13-alkylen)ether, Poly(C14-alkylen)ether, Poly(C15-alkylen)ether, Poly(C16-alkylen)ether, Poly(C17-alkylen)ether, Poly(C18-alkylen)ether, Poly(C19-alkylen)ether, Poly(C20-alkylen)ether und einem Gemisch aus zwei oder mehr davon, und die Poly(C2- bis C6-alkylen)ether sind ausgewählt aus der Gruppe bestehend aus Poly(C2-alkylen)ether, Poly(C3-alkylen)ether, Poly(C4-alkylen)ether, Poly(C5-alkylen)ether, Poly(C6-alkylen)ether und einem Gemisch aus zwei oder mehr davon.

Die für die jeweiligen Alkylenreste des Alkylendiisocyanats gemäß (i), des Alkylendiols gemäß (ii) und des Polyalkylenethers gemäß (iii) angegebene Anzahl der Kohlenstoffatome bezieht sich auf die Gesamtzahl der Kohlenstoffatome des Alkylenrests. So ist beispielsweise unter "C20-Alkylen" ein Alkylenrest zu verstehen, der 20 Kohlenstoffatome aufweist.

Bevorzugt weist der Polyalkylenether gemäß (iii) ein Zahlenmittel des Molekulargewichts (Mₙ) im Bereich von 300 bis 8.000 g, weiter bevorzugt von 600 bis 4.500 g, weiter bevorzugt von 800 bis 2.500 g auf.

Bevorzugt basiert das thermoplastische Polyurethan auf einem Alkylendiisocyanat gemäß (i) ausgewählt aus der Gruppe bestehend aus C1- bis C20-Alkylendiisocyanaten und einem Gemisch aus zwei oder mehr davon, einem Alkylendiol gemäß (ii) ausgewählt aus der Gruppe bestehend aus C1- bis C20-Alkylendiolen und einem Gemisch aus zwei oder mehr davon und einem Polyalkylenether gemäß (iii) mit einem Zahlenmittel des Molekulargewichts (Mₙ) im Bereich von 300 bis 8.000 g ausgewählt aus der Gruppe bestehend aus Poly(C1- bis C20-alkylen)ethern und einem Gemisch aus zwei oder mehr davon. Weiter bevorzugt basiert das thermoplastische Polyurethan auf einem Alkylendiisocyanat gemäß (i) ausgewählt aus der Gruppe bestehend aus C6- bis C13-Alkylendiisocyanaten und einem Gemisch aus zwei oder mehr davon, einem Alkylendiol gemäß (ii) ausgewählt aus der Gruppe bestehend aus C4- bis C6-Alkylendiolen und einem Gemisch aus zwei oder mehr davon und einem Polyalkylenether gemäß (iii) mit einem Zahlenmittel des Molekulargewichts (Mₙ) im Bereich von 600 bis 4.500 g ausgewählt aus der Gruppe bestehend aus Poly(C2- bis C6-alkylen)ethern. Weiter bevorzugt basiert das thermoplastische Polyurethan auf einem Alkylendiisocyanat gemäß (i) ausgewählt aus der Gruppe bestehend aus 1,6-Hexamethylendiisocyanat (HDI), 4,4'-Diisocyanatodicyclohexylmethan (H12MDI), 1-Isocyanato-3-isocyanatomethyl-3,5,5-trimethylcyclohexan (IPDI) und einem Gemisch aus zwei oder mehr davon, einem Alkylendiol gemäß (ii) ausgewählt aus der Gruppe bestehend aus 1,4-Butandiol und 1,6-Hexandiol und einem Gemisch davon, und einem Polyalkylenether gemäß (iii) ausgewählt aus Polytetrahydrofuran mit einem Zahlenmittel des Molekulargewichts (Mₙ) im Bereich von 800 bis 2.500 g. Weiter bevorzugt basiert das thermoplastische Polyurethan gemäß b) auf (i) 1,6-Hexamethylendiisocyanat (HDI) oder 4,4'-Diisocyanatodicyclohexylmethan (H12MDI), (ii) 1,4-Butandiol oder 1,6-Hexandiol, und (iii) Polytetrahydrofuran mit einem Zahlenmittel des Molekulargewichts (Mₙ) im Bereich von 800 bis 2.500 g.

Bevorzugt weisen mindestens eine, weiter bevorzugt mindestens zwei, weiter bevorzugt sämtliche der Komponenten Alkylendiisocyanat (i), Alkylendiol (ii) und Polyalkylenether (iii) einen linearen und/oder cyclischen Alkylenrest auf, weiter bevorzugt weist das Alkylendiisocyanat (i) einen linearen und/oder cyclischen Alkylenrest, das Alkylendiol (ii) einen linearen Alkylenrest und der Polyalkylenether (iii) einen linearen Alkylenrest auf.

Unter dem hier verwendeten Begriff "linearer und cyclischer Alkylenrest" ist ein Alkylenrest zu verstehen, welcher aus mindestens einem linearen und mindestens einem cyclischen Alkylenrest zusammengesetzt ist, wie zum Beispiel der Dicyclohexylmethanrest von 4,4'-Diisocyanatodicyclohexylmethan (H12MDI).

Bevorzugt weist das thermoplastische Polyurethan ein Zahlenmittel des Molekulargewichts (Mₙ) im Bereich von 10.000 bis 300.000 g, weiter bevorzugt von 15.000 bis 200.000 g, weiter bevorzugt von 19.000 bis 160.000 g auf.

Das erfindungsgemäße thermoplastische Copolymer weist bevorzugt einem Gehalt von nicht copolymerisiertem Lactam von höchstens 10 Gew.-%, weiter bevorzugt von höchstens 7 Gew.-%, weiter bevorzugt von höchstens 5 Gew.-%, bezogen auf die Summe der Gewichte des thermoplastischen Copolymers und des nicht copolymerisierten Lactams, auf.

Bevorzugt enthält das erfindungsgemäße thermoplastische Copolymer das thermoplastische Polyurethan in einer Menge von 30 bis 75 Gew.-%, weiter bevorzugt 33 bis 70 Gew.-%, weiter bevorzugt 36 bis 64 Gew.-%, bezogen auf die Summe der Gewichte des im Copolymer enthaltenen Caprolactams und thermoplastischen Polyurethans.

Bevorzugt ist ein thermoplastisches Copolymer, welches basiert auf Polycaprolactam und einem auf
(i) einem C3- bis C18-Alkylendiisocyanat;
(ii) einem C3- bis C8-Alkylendiol; und
(iii) einem Poly(C2- bis C6-alkylen)ether mit einem Zahlenmittel des Molekulargewichts (Mₙ) im Bereich von 600 bis 4.500 g
basierenden thermoplastischen Polyurethan,
wobei das Copolymer das thermoplastische Polyurethan in einer Menge von 25 bis 80 Gew.-%, bezogen auf die Summe der Gewichte des im Copolymer enthaltenen Caprolactams und thermoplastischen Polyurethans, enthält.

Bevorzugt weist das erfindungsgemäße thermoplastische Copolymer ein E-Modul von bis zu 1.500 MPa, weiter bevorzugt im Bereich von 100 bis 1.500 MPa, weiter bevorzugt von 300 bis 700 MPa, bestimmt über DIN EN ISO 527, auf.

Bevorzugt weist das erfindungsgemäße thermoplastische Copolymer eine Bruchspannung von bis zu 80 MPa, weiter bevorzugt im Bereich von 5 bis 80 MPa, weiter bevorzugt von 10 bis 30 MPa, bestimmt über DIN EN ISO 527, auf.

Bevorzugt weist das erfindungsgemäße thermoplastische Copolymer eine maximale Bruchspannung von bis zu 90 MPa, weiter bevorzugt im Bereich von 5 bis 90 MPa, weiter bevorzugt von 10 bis 30 MPa, bestimmt über DIN EN ISO 527, auf.

Bevorzugt weist das erfindungsgemäße thermoplastische Copolymer eine Bruchdehnung im Bereich von 200 bis 800 %, weiter bevorzugt von 300 bis 700 %, weiter bevorzugt von 400 bis 600 %, bestimmt über DIN EN ISO 527, auf.

Bevorzugt ist das erfindungsgemäße thermoplastische Copolymer hergestellt oder herstellbar durch das erfindungsgemäße Verfahren zur Herstellung eines thermoplastischen, auf Polycaprolactam und einem thermoplastischen Polyurethan basierenden Copolymers. Weiter bevorzugt wird das erfindungsgemäße thermoplastische Copolymer in Form eines Granulats bereitgestellt, welches hergestellt oder herstellbar ist durch das erfindungsgemäße Verfahren. Weiter bevorzugt wird das erfindungsgemäße thermoplastische Copolymer in Form eines getemperten Granulats bereitgestellt, welches hergestellt oder herstellbar ist durch das erfindungsgemäße Verfahren.

### Formkörper

Der Formkörper unterliegt grundsätzlich keiner besonderen Beschränkung. Beispielsweise kann der Formkörper ein massiver Formkörper, das heißt ein Körper welcher keine Hohlräume aufweist, oder ein Hohlkörper, welcher Hohlräume aufweist, wie zum Beispiel ein Schlauch, sein. Bevorzugt ist der Formkörper ein Hohlkörper, weiter bevorzugt ein Schlauch, weiter bevorzugt ein Pneumatikschlauch.

Bevorzugt weist der Formkörper eine Berstdruckfestigkeit im Bereich von 30 bis 60 bar, weiter bevorzugt von 35 bis 55 bar, weiter bevorzugt von 40 bis 50 bar, auf. Somit sind die erfindungsgemäßen Formkörper besonders geeignet für den Einsatz in Schläuchen, welche hohen Drücken standhalten müssen, wie beispielweise Pneumatikschläuche.

Der Formkörper enthält bevorzugt mindestens einen Füllstoff. Der Füllstoff unterliegt grundsätzlich keiner besonderen Beschränkung. Der Füllstoff kann ein anorganisches oder organisches Material umfassen, wie zum Beispiel ein anorganischen Material ausgewählt aus der Gruppe aus Gläsern, Silikaten, Ruß, Graphit, Metalloxiden, Metallcarbonaten, Metallsulfaten und einem Gemisch aus zwei oder mehr davon, oder ein organisches Material wie zum Beispiel ein Aramid-Polymer. Der Füllstoff kann beispielsweise als Farbpigment, Antistatikum, Flammschutz oder zur mechanischen Verstärkung des Formköpers zugegeben werden. Die Form des Füllstoffs unterliegt keiner besonderen Beschränkung. Der Füllstoff kann in partikulärer Form wie zum Beispiel Pulver-, Granulat- oder Kugelform vorliegen, oder in Form einer Faser oder eines Fasergewebes. Bevorzugt umfasst der Füllstoff Glasfaser, weiter bevorzugt Glasfasergewebe. Bevorzugt wird der Füllstoff in dem oben beschriebenen diskontinuierlichen Verfahren bei dem Polymerisieren gemäß d) zugegeben, wobei in einer Form polymerisiert wird, bevorzugt in einer Reaction Injection Molding (RIM) Form.

Bevorzugt ist der Formköper hergestellt aus einem thermoplastischen Copolymer, welches basiert auf Polycaprolactam und einem auf
(i) einem C3- bis C18-Alkylendiisocyanat;
(ii) einem C3- bis C8-Alkylendiol; und
(iii) einem Poly(C2- bis C6-alkylen)ether mit einem Zahlenmittel des Molekulargewichts (Mₙ) im Bereich von 600 bis 4.500 g
basierenden thermoplastischen Polyurethan,
wobei das Copolymer das thermoplastische Polyurethan in einer Menge von 25 bis 80 Gew.-%, bezogen auf die Summe der Gewichte des im Copolymer enthaltenen Caprolactams und thermoplastischen Polyurethans, enthält.

### Verwendung

Des Weiteren betrifft die vorliegende Erfindung eine Verwendung des erfindungsgemäßen thermoplastischen Copolymers zur Herstellung eines Formkörpers. Bevorzugt ist der Formkörper ein Hohlkörper, bevorzugt ein Schlauch, weiter bevorzugt ein Pneumatikschlauch. Der Formkörper enthält bevorzugt mindestens einen Füllstoff, weiter bevorzugt Glasfaser, weiter bevorzugt Glasfasergewebe.

Die vorliegende Erfindung wird durch die folgenden bevorzugten Ausführungsformen und deren Kombinationen, die sich aus den entsprechenden Rückbezügen und Verweisen ergeben, näher illustriert.
1. Verfahren zur Herstellung eines thermoplastischen, auf Polycaprolactam und einem thermoplastischen Polyurethan basierenden Copolymers, umfassend:
   a) Bereitstellen von Caprolactam;
   b) Bereitstellen des thermoplastischen, auf
      (i) einem Alkylendiisocyanat;
      (ii) einem Alkylendiol; und
      (iii) einem Polyalkylenether
         basierenden Polyurethans mit einer Schmelztemperatur T₀;
   c) Herstellen einer flüssigen Mischung einer Temperatur T₁ enthaltend das Caprolactam und das thermoplastische Polyurethan;
   d) Zugeben eines Polymerisationskatalysators zur flüssigen Mischung gemäß c) unter Erhalt einer Mischung enthaltend das Caprolactam und das thermoplastische Polyurethan in einem Massenverhältnis von Caprolactam zu thermoplastischem Polyurethan im Bereich von 3:1 bis 1:4, und Polymerisieren bei einer Temperatur T₂ von höchstens 175 °C unter Erhalt des thermoplastischen Copolymers.
2. Verfahren nach Ausführungsform 1, wobei gemäß a) das Caprolactam in festem oder geschmolzenem Zustand, bevorzugt in geschmolzenem Zustand bereitgestellt wird.
3. Verfahren nach Ausführungsform 1 oder 2, wobei das Alkylendiisocyanat gemäß (i) ausgewählt ist aus der Gruppe bestehend aus C1- bis C20-Alkylendiisocyanaten und einem Gemisch aus zwei oder mehr davon, bevorzugt aus der Gruppe bestehend aus C3- bis C18-Alkylendiisocyanaten und einem Gemisch aus zwei oder mehr davon, weiter bevorzugt aus der Gruppe bestehend aus C6- bis C13-Alkylendiisocyanaten und einem Gemisch aus zwei oder mehr davon, weiter bevorzugt aus der Gruppe bestehend aus 1,6-Hexamethylendiisocyanat (HDI), 4,4'-Diisocyanatodicyclohexylmethan (H12MDI), 1-Isocyanato-3-isocyanatomethyl-3,5,5-trimethylcyclohexan (IPDI) und einem Gemisch aus zwei oder mehr davon.
4. Verfahren nach einer der Ausführungsformen 1 bis 3, wobei das Alkylendiol gemäß (ii) ausgewählt ist aus der Gruppe bestehend aus C1- bis C20-Alkylendiolen und einem Gemisch aus zwei oder mehr davon, bevorzugt aus der Gruppe bestehend aus C3- bis C8-Alkylendiolen und einem Gemisch aus zwei oder mehr davon, weiter bevorzugt aus der Gruppe bestehend aus C4- bis C6-Alkylendiolen und einem Gemisch aus zwei oder mehr davon, weiter bevorzugt aus der Gruppe bestehend aus 1,4-Butandiol, 1,6-Hexandiol und einem Gemisch davon.
5. Verfahren nach einer der Ausführungsformen 1 bis 4, wobei der Polyalkylenether gemäß (iii) ausgewählt ist aus der Gruppe bestehend aus Poly(C1- bis C20-alkylen)ethern und einem Gemisch aus zwei oder mehr davon, bevorzugt aus der Gruppe bestehend aus Poly(C2- bis C12-alkylen)ethern und einem Gemisch aus zwei oder mehr davon, weiter bevorzugt aus der Gruppe bestehend aus Poly(C2- bis C6-alkylen)ethern und einem Gemisch aus zwei oder mehr davon, wobei der Polyalkylenether gemäß (iii) weiter bevorzugt Polytetrahydrofuran ist.
6. Verfahren nach einer der Ausführungsformen 1 bis 5, wobei mindestens eine, bevorzugt mindestens zwei, weiter bevorzugt sämtliche der Komponenten Alkylendiisocyanat (i), Alkylendiol (ii) und Polyalkylenether (iii) einen linearen und/oder cyclischen Alkylenrest aufweisen, wobei weiter bevorzugt das Alkylendiisocyanat (i) einen linearen und/oder cyclischen Alkylenrest, das Alkylendiol (ii) einen linearen Alkylenrest und der Polyalkylenether (iii) einen linearen Alkylenrest aufweisen.
7. Verfahren nach einer der Ausführungsformen 1 bis 6, wobei der Polyalkylenether gemäß (iii) ein Zahlenmittel des Molekulargewichts (Mₙ) im Bereich von 300 bis 8.000 g, bevorzugt von 600 bis 4.500 g, weiter bevorzugt von 800 bis 2.500 g aufweist.
8. Verfahren nach einer der Ausführungsformen 1 bis 7, wobei das thermoplastische Polyurethan gemäß b) ein Zahlenmittel des Molekulargewichts (Mₙ) im Bereich von 10.000 bis 300.000 g, bevorzugt von 15.000 bis 200.000 g, weiter bevorzugt von 19.000 bis 160.000 g aufweist.
9. Verfahren nach einer der Ausführungsformen 1 bis 8, wobei T₀ im Bereich von 155 bis 280 °C, bevorzugt von 160 bis 250 °C, weiter bevorzugt von 170 bis 230 °C liegt.
10. Verfahren nach einer der Ausführungsformen 1 bis 9, wobei T₁ kleiner oder gleich T₀ ist, wobei T₁ bevorzugt im Bereich von 100 bis 175 °C, weiter bevorzugt von 100 bis 160 °C, weiter bevorzugt von 110 bis 150 °C liegt.
11. Verfahren nach einer der Ausführungsformen 1 bis 10, wobei T₂ im Bereich von 100 bis 175 °C, bevorzugt von 115 bis 170 °C, weiter bevorzugt von 130 bis 170 °C liegt.
12. Verfahren nach einer der Ausführungsformen 1 bis 11, wobei T₂ größer oder gleich T₁ ist, wobei die Temperaturdifferenz T₂ - T₁ bevorzugt im Bereich von 0 bis 40 °C, weiter bevorzugt von 0 bis 30 °C, weiter bevorzugt von 0 bis 20 °C liegt.
13. Verfahren nach einer der Ausführungsformen 1 bis 12, wobei der Polymerisationskatalysator gemäß d) ein Salz von Caprolactam, bevorzugt ein Alkali- oder Erdalkalimetallsalz von Caprolactam, weiter bevorzugt ein Alkalimetallsalz von Caprolactam, weiter bevorzugt das Natriumsalz oder das Kaliumsalz von Caprolactam, weiter bevorzugt das Natriumsalz von Caprolactam ist.
14. Verfahren nach einer der Ausführungsformen 1 bis 13, wobei gemäß d) der Polymerisationskatalysator in einer Menge im Bereich von 0,2 bis 4 Gew.-%, bevorzugt von 0,4 bis 3,4 Gew.-%, weiter bevorzugt von 0,6 bis 3 Gew.-%, bezogen auf die Summe der Gewichte des Caprolactams und des thermoplastischen Polyurethans, zugegeben wird.
15. Verfahren nach einer der Ausführungsformen 1 bis 14, wobei gemäß d) zusätzlich ein Polymerisationsaktivator zugegeben wird.
16. Verfahren nach Ausführungsform 15, wobei der Polymerisationsaktivator ausgewählt ist aus der Gruppe bestehend aus mit einer Carbonylgruppe N-substituierten Lactamen, aliphatischen und aromatischen Diisocyanaten, Allophanaten, Polyisocyanaten, aliphatischen und aromatischen Disäurehalogeniden, und einem Gemisch aus zwei oder mehr davon, bevorzugt aus der Gruppe bestehend aus N,N'-C1- bis N,N'-C20-alkylendicarbamoylcaprolactamen, N,N'-Alkylendicarbamoylcaprolactamen, N-Acetyl C3-C10 Lactamen, C2-C16 Alkylendiisocyanaten, C5-C12 Arylendiisocyanaten, C5-C16 Arylenalkylendiisocyanaten, C1-C6 Alkylenallophanaten, C12-C24 Alkylenpolyisocyanaten, C2-C16 Alkylendisäurehalogeniden, C5-C12 Arylendisäurehalogeniden, C5-C16 Arylenalkylendisäurehalogeniden, und einem Gemisch aus zwei oder mehr davon, weiter bevorzugt aus der Gruppe bestehend aus N,N'-C3- bis N,N'-C8-Alkylendicarbamoylcaprolactamen, N-Acetyl C4-C8 Lactamen, C4-C13-Alkylendiiso-cyanaten, C6-C10 Arylendiisocyanaten, C7-C10 Arylenalkylendiisocyanaten, C2-C4 Alkylenallophanaten, C16-C20 Alkylenpolyisocyanaten, C4-C13 Alkylendisäurehalogeni-den, C6-C10 Arylendisäurehalogeniden, C8-C12 Arylenalkylendisäurehalogeniden, und einem Gemisch aus zwei oder mehr davon.
17. Verfahren nach Ausführungsform 15 oder 16, wobei der Polymerisationsaktivator ausgewählt ist aus der Gruppe bestehend aus N,N'-Hexamethylen-1,6-dicarbamoylcaprolactam, Acetylcaprolactam, Butylendiisocyanat, Hexamethylendiisocyanat, Methylenbis(cyclohexylisocyanat); Toluyldiisocyanat, Ethylallophanat, Trimer von 1,6-Hexamethylendiisocyanat (HDI), Butylendisäurebromid, Hexamethylendisäurechlorid, 4,4'-Methylenbis(cyclohexylsäurechlorid, Toluylmethylendisäurechlorid, und einem Gemisch aus zwei oder mehr davon.
18. Verfahren nach einer der Ausführungsformen 15 bis 17, wobei der Polymerisationsaktivator ausgewählt ist aus der Gruppe bestehend aus den N,N'-Alkylendicarbamoylcaprolactamen und einem Gemisch aus zwei oder mehr davon, bevorzugt aus der Gruppe bestehend aus N,N'-C1- bis N,N'-C20-alkylendicarbamoylcaprolactamen und einem Gemisch aus zwei oder mehr davon, weiter bevorzugt aus der Gruppe bestehend aus N,N'-C2- bis N,N'-C12-alkylendicarbamoylcaprolactamen und einem Gemisch aus zwei oder mehr davon, weiter bevorzugt aus der Gruppe bestehend aus N,N'-C3- bis N,N'-C8-alkylendicarbamoylcaprolactamen und einem Gemisch aus zwei oder mehr davon, wobei der Polymerisationsaktivator weiter bevorzugt N,N'-Hexamethylen-1,6-dicarbamoylcaprolactam ist.
19. Verfahren nach einer der Ausführungsformen 15 bis 18, wobei der Polymerisationsaktivator in einer Menge im Bereich von 0,5 bis 15 Gew.-%, bevorzugt von 1 bis 12 Gew.-%, weiter bevorzugt von 2 bis 9 Gew.-%, bezogen auf die Summe der Gewichte des Caprolactams und des thermoplastischen Polyurethans, zugegeben wird.
20. Verfahren nach einer der Ausführungsformen 1 bis 19, wobei das gemäß d) erhaltene thermoplastische Copolymer einen Gehalt von nicht copolymerisiertem Lactam von höchstens 10 Gew.-%, bevorzugt von höchstens 7 Gew.-%, weiter bevorzugt von höchstens 5 Gew.-%, bezogen auf die Summe der Gewichte des thermoplastischen Copolymers und des nicht copolymerisierten Lactams, aufweist.
21. Verfahren nach einer der Ausführungsformen 1 bis 20, wobei gemäß d) durch Zugeben des Polymerisationskatalysators zur flüssigen Mischung gemäß c) eine Mischung enthaltend das Caprolactam und das thermoplastische Polyurethan in einem Massenverhältnis von Caprolactam zu thermoplastischem Polyurethan im Bereich von 7:3 bis 1:3, bevorzugt von 2:1 bis 3:7, weiter bevorzugt von 16:9 bis 9:16 erhalten wird.
22. Verfahren nach einer der Ausführungsformen 1 bis 21, wobei das Herstellen gemäß c) und das Zugeben und Polymerisieren gemäß d) als diskontinuierliches oder kontinuierliches Verfahren, bevorzugt als kontinuierliches Verfahren, weiter bevorzugt als kontinuierliches Verfahren umfassend ein Extrusionsverfahren, durchgeführt werden.
23. Verfahren nach Ausführungsform 22, wobei das Verfahren als diskontinuierliches Verfahren durchgeführt wird, wobei gemäß a) das Caprolactam im geschmolzenen Zustand und gemäß b) das thermoplastische Polyurethan im festen Zustand bereitgestellt werden, und die flüssige Mischung gemäß c) durch Zugabe des thermoplastischen Polyurethans zu Caprolactam im geschmolzenen Zustand bereitgestellt wird.
24. Verfahren nach Ausführungsform 23, wobei die Mischung gemäß c) für einen Zeitraum im Bereich von 1 min bis 1,5 h, bevorzugt von 10 min bis 70 min, weiter bevorzugt von 20 bis 60 min bei der Temperatur T₁ gehalten wird.
25. Verfahren nach Ausführungsform 23 oder 24, wobei gemäß d) der Polymerisationskatalysator in Form einer flüssigen Mischung enthaltend Polymerisationskatalysator und Caprolactam zugegeben wird.
26. Verfahren nach Ausführungsform 25, wobei die flüssige Mischung enthaltend Polymerisationskatalysator und Caprolactam durch Zugabe des Polymerisationskatalysators zu Caprolactam im geschmolzenen Zustand bereitgestellt wird.
27. Verfahren nach Ausführungsform 25 oder 26, wobei die flüssige Mischung enthaltend Polymerisationskatalysator und Caprolactam den Polymerisationskatalysator in einer Menge im Bereich von 0,4 bis 8 Gew.-%, bevorzugt von 0,8 bis 6,8 Gew.-%, weiter bevorzugt von 1,2 bis 6 Gew.-%, bezogen auf das Gewicht des Caprolactams, enthält.
28. Verfahren nach einer der Ausführungsformen 25 bis 27, wobei die flüssige Mischung enthaltend Polymerisationskatalysator und Caprolactam für einen Zeitraum im Bereich von 1 min bis 1,5 h, bevorzugt von 10 min bis 70 min, weiter bevorzugt von 20 bis 60 min bei einer Temperatur T₃ gehalten wird.
29. Verfahren nach Ausführungsform 28, wobei T₃ im Bereich von 100 bis 175 °C, weiter bevorzugt von 105 bis 155 °C, weiter bevorzugt von 110 bis 130 °C liegt.
30. Verfahren nach einer der Ausführungsformen 23 bis 29, wobei gemäß d) zusätzlich ein Polymerisationsaktivator zugegeben wird, und wobei bevorzugt der Polymerisationsaktivator der Mischung gemäß c) zugegeben wird.
31. Verfahren nach Ausführungsform 30, wobei der Polymerisationsaktivator der Mischung gemäß c) in einer Menge im Bereich von 1 bis 30 Gew.-%, bevorzugt von 2 bis 24 Gew.-%, weiter bevorzugt von 4 bis 18 Gew.-%, bezogen auf die Summe der Gewichte des Caprolactams und des thermoplastischen Polyurethans, zugegeben wird.
32. Verfahren nach einer der Ausführungsformen 25 bis 31, wobei gemäß d) die flüssige Mischung enthaltend Polymerisationskatalysator und Caprolactam zur flüssigen Mischung gemäß c) in einem Massenverhältnis von Mischung enthaltend Polymerisationskatalysator und Caprolactam zu Mischung gemäß c) von 1:4 bis 3:1, bevorzugt 1:3 bis 2:1, weiter bevorzugt 1:1,5 bis 1,5:1 gemischt werden.
33. Verfahren nach einer der Ausführungsformen 25 bis 32, wobei die flüssige Mischung enthaltend Polymerisationskatalysator und Caprolactam und die flüssige Mischung gemäß c) bei einer Temperatur T₄ gemischt werden.
34. Verfahren nach einer der Ausführungsformen 25 bis 33, wobei T₄ im Bereich von 100 bis 175 °C, bevorzugt von 105 bis 155 °C, weiter bevorzugt von 110 bis 130 °C liegt.
35. Verfahren nach einer der Ausführungsformen 23 bis 34, wobei das Polymerisieren gemäß d) für einen Zeitraum im Bereich von 0,1 bis 20 min, bevorzugt von 0,3 bis 10 min, weiter bevorzugt von 0,5 bis 3 min durchgeführt wird.
36. Verfahren nach Ausführungsform 22, wobei das Verfahren als diskontinuierliches Verfahren durchgeführt wird, wobei gemäß a) das Caprolactam im festen Zustand und gemäß b) das thermoplastische Polyurethan im festen Zustand bereitgestellt werden und gemäß c) das Caprolactam und das thermoplastische Polyurethan durch Kneten gemischt werden und die erhaltene Mischung auf T₁ erwärmt wird.
37. Verfahren nach Ausführungsform 36, wobei die Mischung gemäß c) für einen Zeitraum im Bereich von 0,1 bis 20 min, bevorzugt von 0,3 min bis 16 min, weiter bevorzugt von 0,5 bis 12 min bei T₁ gehalten wird.
38. Verfahren nach Ausführungsform 36 oder 37, wobei das Polymerisieren gemäß d) für einen Zeitraum im Bereich von 0,1 bis 20 min, bevorzugt von 0,3 bis 10 min, weiter bevorzugt von 0,5 bis 3 min durchgeführt wird.
39. Verfahren nach Ausführungsform 22, wobei das Herstellen gemäß c) und das Zugeben und Polymerisieren gemäß d) als kontinuierliches Verfahren umfassend ein Extrusionsverfahren durchgeführt werden, wobei das Herstellen gemäß c) außerhalb des für das Extrusionsverfahren verwendeten Extruders durchgeführt wird, die gemäß c) hergestellte Mischung dem für das Extrusionsverfahren verwendeten Extruder zugeführt wird und das Polymerisieren gemäß d) innerhalb des Extruders durchgeführt wird.
40. Verfahren nach Ausführungsform 39, wobei gemäß a) das Caprolactam im festen Zustand und gemäß b) das thermoplastische Polyurethan im festen Zustand bereitgestellt werden und gemäß c) das Caprolactam und das thermoplastische Polyurethan durch Kneten im Extruder gemischt werden und die erhaltene Mischung auf T₁ erwärmt wird.
41. Verfahren nach Ausführungsform 39 oder 40, wobei die Mischung gemäß c) für einen Zeitraum im Bereich von 5 min bis 3 h, bevorzugt von 10 min bis 2 h, weiter bevorzugt von 20 min bis 1 h bei T₁ gehalten wird.
42. Verfahren nach einer der Ausführungsformen 39 bis 41, wobei der Polymerisationskatalysator in mindestens einer ersten Zone des Extruders zugeführt wird und die Mischung gemäß c) in mindestens einer zweiten Zone des Extruders zugeführt wird, wobei die mindestens eine zweite Zone der mindestens einen ersten Zone nachgeschaltet ist.
43. Verfahren nach einer der Ausführungsformen 39 bis 42, wobei gemäß d) zusätzlich ein Polymerisationsaktivator zugegeben wird und der Polymerisationsaktivator zu der außerhalb des Extruders hergestellten Mischung gemäß c) zugegeben wird.
44. Verfahren nach einer der Ausführungsformen 39 bis 43, wobei das Polymerisieren gemäß d) in mindestens einer Zone des Extruders für einen Zeitraum im Bereich von 0,5 bis 10 min, bevorzugt von 1 bis 6 min, weiter bevorzugt von 1,5 bis 4 min durchgeführt wird.
45. Verfahren nach Ausführungsform 22, wobei das Herstellen gemäß c) und das Zugeben und Polymerisieren gemäß d) als kontinuierliches Verfahren umfassend ein Extrusionsverfahren durchgeführt werden, wobei das Herstellen gemäß c) und das Polymerisieren gemäß d) innerhalb des für das Extrusionsverfahren verwendeten Extruders durchgeführt werden.
46. Verfahren nach Ausführungsform 45, wobei gemäß a) das Caprolactam im flüssigen Zustand und gemäß b) das thermoplastische Polyurethan im festen Zustand bereitgestellt werden und das Caprolactam im flüssigen Zustand und das thermoplastische Polyurethan im festen Zustand dem Extruder zugeführt werden.
47. Verfahren nach Ausführungsform 45 oder 46, wobei das thermoplastische Polyurethan in mindestens einer ersten Zone des Extruders bei einer Temperatur größer oder gleich T₀ in den flüssigen Zustand gebracht wird.
48. Verfahren nach Ausführungsform 47, wobei in mindestens einer zweiten Zone des Extruders, welche der mindestens einen ersten Zone des Extruders nachgeschaltet ist, das Caprolactam unter Erhalt der Mischung gemäß c) zu geführt wird.
49. Verfahren nach Ausführungsform 48, wobei in mindestens einer dritten Zone des Extruders, welche der mindestens einen zweiten Zone des Extruders nachgeschaltet ist, der Polymerisationskatalysator zugeführt wird und gemäß d) polymerisiert wird.
50. Verfahren nach einer der Ausführungsformen 45 bis 49, wobei gemäß d) zusätzlich ein Polymerisationsaktivator zugegeben wird und der Polymerisationsaktivator als Mischung mit Caprolactam in einer zweiten Zone des Extruders zugeführt wird.
51. Verfahren nach einer der Ausführungsformen 45 bis 50, wobei das Polymerisieren gemäß d) für einen Zeitraum im Bereich von 0,5 bis 10 min, bevorzugt 1 bis 6 min, weiter bevorzugt 1,5 bis 4 min durchgeführt wird.
52. Verfahren nach einer der Ausführungsformen 1 bis 51, zusätzlich umfassend:
   e) Granulieren des gemäß d) erhaltenen Copolymers.
53. Verfahren nach einer der Ausführungsformen 1 bis 52, zusätzlich umfassend:
   f) Tempern des gemäß d) erhaltenen Copolymers, bevorzugt des gemäß d) erhaltenen und gemäß e) granulierten Copolymers, bevorzugt bei einer Temperatur im Bereich von 60 bis 170 °C, weiter bevorzugt von 90 bis 150 °C, weiter bevorzugt von 100 bis 130 °C.
54. Verfahren nach einer der Ausführungsformen 23 bis 35, wobei gemäß d) in einer Form polymerisiert wird, bevorzugt in einer Reaction Injection Molding (RIM) Form.
55. Thermoplastisches Copolymer, basierend auf Polycaprolactam und einem auf
   (i) einem Alkylendiisocyanat;
   (ii) einem Alkylendiol; und
   (iii) einem Polyalkylenether
   basierenden thermoplastischen Polyurethan,
   wobei das Copolymer das thermoplastische Polyurethan in einer Menge von 25 bis 80 Gew.-%, bezogen auf die Summe der Gewichte des im Copolymer enthaltenen Caprolactams und thermoplastischen Polyurethans, enthält.
56. Thermoplastisches Copolymer nach Ausführungsform 55, wobei das Alkylendiisocyanat gemäß (i) ausgewählt ist aus der Gruppe bestehend aus C1- bis C20-Alkylendiisocyanaten und einem Gemisch aus zwei oder mehr davon, bevorzugt aus der Gruppe bestehend aus C3- bis C18-Alkylendiisocyanaten und einem Gemisch aus zwei oder mehr davon, weiter bevorzugt aus der Gruppe bestehend aus C6- bis C13-Alkylendiisocyanaten und einem Gemisch aus zwei oder mehr davon, weiter bevorzugt aus der Gruppe bestehend aus 1,6-Hexamethylendiisocyanat (HDI), 4,4'-Diisocyanatodicyclohexylmethan (H12MDI), 1-Isocyanato-3-isocyanatomethyl-3,5,5-trimethylcyclohexan (IPDI) und einem Gemisch aus zwei oder mehr davon.
57. Thermoplastisches Copolymer nach Ausführungsform 55 oder 56, wobei das Alkylendiol gemäß (ii) ausgewählt ist aus der Gruppe bestehend aus C1- bis C20-Alkylendiolen und einem Gemisch aus zwei oder mehr davon, bevorzugt aus der Gruppe bestehend aus C3- bis C8-Alkylendiolen und einem Gemisch aus zwei oder mehr davon, weiter bevorzugt aus der Gruppe bestehend aus C4- bis C6-Alkylendiolen und einem Gemisch aus zwei oder mehr davon, weiter bevorzugt aus der Gruppe bestehend aus 1,4-Butandiol, 1,6-Hexandiol und einem Gemisch davon.
58. Thermoplastisches Copolymer nach einer der Ausführungsformen 55 bis 57, wobei der Polyalkylenether gemäß (iii) ausgewählt ist aus der Gruppe bestehend aus Poly(C1- bis C20-alkylen)ethern und einem Gemisch aus zwei oder mehr davon, bevorzugt aus der Gruppe bestehend aus Poly(C2- bis C12-alkylen)ethern und einem Gemisch aus zwei oder mehr davon, weiter bevorzugt aus der Gruppe bestehend aus Poly(C2- bis C6-alkylen)ethern und einem Gemisch aus zwei oder mehr davon, wobei der Polyalkylenether gemäß (iii) weiter bevorzugt Polytetrahydrofuran ist.
59. Thermoplastisches Copolymer nach einer der Ausführungsformen 55 bis 58, wobei mindestens eine, bevorzugt mindestens zwei, weiter bevorzugt sämtliche der Komponenten Alkylendiisocyanat (i), Alkylendiol (ii) und Polyalkylenether (iii) einen linearen und/oder cyclischen Alkylenrest aufweisen, wobei weiter bevorzugt das Alkylendiisocyanat (i) einen linearen und/oder cyclischen Alkylenrest, das Alkylendiol (ii) einen linearen Alkylenrest und der Polyalkylenether (iii) einen linearen Alkylenrest aufweisen.
60. Thermoplastisches Copolymer nach einer der Ausführungsformen 55 bis 59 mit einem Gehalt von nicht copolymerisiertem Lactam von höchstens 10 Gew.-%, bevorzugt von höchstens 7 Gew.-%, weiter bevorzugt von höchstens 5 Gew.-%, bezogen auf die Summe der Gewichte des thermoplastischen Copolymers und des nicht copolymerisierten Lactams.
61. Thermoplastisches Copolymer nach einer der Ausführungsformen 55 bis 60, wobei der Polyalkylenether gemäß (iii) ein Zahlenmittel des Molekulargewichts (Mₙ) im Bereich von 300 bis 8.000 g, bevorzugt von 600 bis 4.500 g, weiter bevorzugt von 800 bis 2.500 g aufweist.
62. Thermoplastisches Copolymer nach einer der Ausführungsformen 55 bis 61, wobei das thermoplastische Polyurethan ein Zahlenmittel des Molekulargewichts (Mₙ) im Bereich von 10.000 bis 300.000 g, bevorzugt von 15.000 bis 200.000 g, weiter bevorzugt von 19.000 bis 160.000 g aufweist.
63. Thermoplastisches Copolymer nach einer der Ausführungsformen 55 bis 62, wobei das Copolymer das thermoplastische Polyurethan in einer Menge von 30 bis 75 Gew.-%, bevorzugt 33 bis 70 Gew.-%, weiter bevorzugt 36 bis 64 Gew.-%, bezogen auf die Summe der Gewichte des im Copolymer enthaltenen Caprolactams und thermoplastischen Polyurethans, enthält.
64. Thermoplastisches Copolymer nach Ausführungsform 63 mit einem E-Modul von bis zu 1.500 MPa, bevorzugt im Bereich von 100 bis 1.500 MPa, weiter bevorzugt von 300 bis 700 MPa, bestimmt über DIN EN ISO 527.
65. Thermoplastisches Copolymer nach Ausführungsform 63 oder 64 mit einer Bruchspannung von bis zu 80 MPa, bevorzugt im Bereich von 5 bis 80 MPa, weiter bevorzugt von 10 bis 30 MPa, bestimmt über DIN EN ISO 527.
66. Thermoplastisches Copolymer nach einer der Ausführungsformen 63 bis 65 mit einer maximalen Bruchspannung von bis zu 90 MPa, bevorzugt im Bereich von 5 bis 90 MPa, weiter bevorzugt von 10 bis 30 MPa, bestimmt über DIN EN ISO 527.
67. Thermoplastisches Copolymer nach einer der Ausführungsformen 63 bis 66 mit einer Bruchdehnung im Bereich von 200 bis 800 %, bevorzugt von 300 bis 700 %, weiter bevorzugt von 400 bis 600 %, bestimmt über DIN EN ISO 527.
68. Thermoplastisches Copolymer nach einer der Ausführungsformen 55 bis 67, hergestellt oder herstellbar durch ein Verfahren gemäß einer der Ausführungsformen 1 bis 54, bevorzugt in Form eines Granulats, hergestellt oder herstellbar durch ein Verfahren gemäß einer der Ausführungsformen 52 oder 53, weiter bevorzugt in Form eines getemperten Granulats, hergestellt oder herstellbar durch ein Verfahren gemäß Ausführungsform 53.
69. Formkörper, hergestellt oder herstellbar aus einem thermoplastischen Copolymer gemäß einer der Ausführungsformen 55 bis 68.
70. Formkörper nach Ausführungsform 69, wobei der Formkörper ein Hohlkörper, bevorzugt ein Schlauch, weiter bevorzugt ein Pneumatikschlauch ist.
71. Formkörper nach Ausführungsform 69 oder 70 mit einer Berstdruckfestigkeit im Bereich von 30 bis 60 bar, bevorzugt von 35 bis 55 bar, weiter bevorzugt von 40 bis 50 bar.
72. Formkörper nach einer der Ausführungsformen 69 bis 71, wobei der Formkörper mindestens einen Füllstoff enthält, welcher bevorzugt bei dem Polymerisieren gemäß d) nach Ausführungsform 54 in der Form bereitgestellt wird.
73. Formkörper nach Ausführungsform 72, wobei der Füllstoff Glasfaser, bevorzugt Glasfasergewebe umfasst.
74. Verwendung eines thermoplastischen Copolymers gemäß einer der Ausführungsformen 55 bis 68 zur Herstellung eines Formkörpers.
75. Verwendung nach Ausführungsform 74, wobei der Formkörper ein Hohlkörper, bevorzugt ein Schlauch, weiter bevorzugt ein Pneumatikschlauch ist.
76. Verwendung nach Ausführungsform 74, wobei der Formkörper mindestens einen Füllstoff, bevorzugt Glasfaser, weiter bevorzugt Glasfasergewebe, enthält.

Die Erfindung wird in den nachfolgenden Beispielen näher erläutert.

### Beispiele

In den nachfolgenden experimentellen Beispielen und Vergleichsbeispielen wurden folgende Ausgangstoffe eingesetzt:
1. Lactam:
   Caprolactam, bezogen von der BASF.
2. Thermoplastische Polyurethane (TPU), bezogen von der BASF:
   Elastollan A1185A (TPU basierend auf Polytetrahydrofuran 1000;
   Hexamethylendiisocyanat (HDI) und 1,6-Hexandiol), getempert bei 110 °C für 3 h;
   Elastollan L1185A (TPU basierend auf Polytetrahydrofuran, 4,4'-Diisocyanatodicyclohexylmethan (H12MDI) und 1,4-Butandiol), getempert bei 110 °C für 3 h;
   Elastollan E1170A (TPU basierend auf Polytetrahydrofuran 1000/2000;
   Methylendiphenyldiisocyanat (MDI) und 1,4-Butandiol), getempert bei 110 °C für 3 h.
3. Polymerisationskatalysator:
   Brüggolen C10 (17-19% Natrium Caprolactamat in Caprolactam), bezogen von der Brüggemann KG, Heilbronn.
4. Polymerisationsaktivator:
   Brüggolen C20 (80% Hexamethylene-1,6-dicarbamoylcaprolactam in Caprolactam), bezogen von der Brüggemann KG, Heilbronn.

### Beispiel 1A

Die Polymerisationsreaktion erfolgte in einem 250 mL Rundkolben in trockener Stickstoffatmosphäre. Caprolactam (120 g) wurde bei 170 °C gelöst, und anschließend erfolgte die Zugabe von 80 g thermoplastischem Polyurethan (40 Gew.-%) (Elastollan A1185A). Die Mischung wurde bei T₁ = 170 °C für 30 min gerührt. Anschließend wurden 23,1 g (11,6 Gew.-%) des Katalysators (Brüggolen C10) in die schmelzflüssige Mischung gegeben und die Polymerisations-reaktion gestartet. Die anionische Polymerisation wurde bei T₂ = 170 °C durchgeführt und nach 1 min durch Abkühlen des Reaktors in Eiswasser (0 °C) gestoppt.

### Beispiel 1B

Beispiel 1A wurde wiederholt, wobei statt Elastollan A1185A als thermoplastisches Polyurethan Elastollan L1185A eingesetzt wurde.

### Beispiel 1C

Die Beispiele 1A und 1B wurden wiederholt, wobei das thermoplastische Polyurethan statt bei einer Temperatur von 170 °C bei 140 °C gelöst wurde, die Caprolactam und das thermoplastische Polyurethan enthaltende Mischung statt bei T₁ = 170 °C bei T₁ = 140 °C für 30 min gerührt wird und die Polymerisationsreaktion statt bei T₂ = 170 °C bei T₂ = 140 °C durchgeführt wurde.

### Beispiel 2A

Die Polymerisation erfolgte auf einem Rheometer (Haake Polylab OS) in einer 60 mL Reaktionskammer. Diese wurde auf 170 °C erhitzt und gleichzeitig mit 35 g Caprolactam (60 Gew.-%) und 23,3 g thermoplastischem Polyurethan (40 Gew.-%) (Elastollan A1185A) befüllt. Die Komponenten wurden bei T₁ = 170 °C für 10 min gemischt, mit anschließender Zugabe von 6,71 g Katalysator (Brüggolen C10), um die anionische Polymerisation zu starten und bei T₂ = 170 °C durchzuführen. Die Reaktionsmischung wurde für weitere 15 min geknetet.

### Beispiel 2B

Beispiel 2A wurde wiederholt, wobei statt Elastollan A1185A als thermoplastisches Polyurethan Elastollan L1185A eingesetzt wurde.

### Beispiel 2C

Die Beispiele 2A und 2B wurden wiederholt, wobei das thermoplastische Polyurethan statt bei einer Temperatur von T₁ = 170 °C bei T₁ = 140 °C gemischt und die Polymerisationsreaktion statt bei einer Temperatur von T₂ = 170 °C bei T₂ = 140 °C durchgeführt wurde.

### Beispiel 3

Die Herstellung des thermoplastischen, auf Polycaprolactam und einem thermoplastischen Polyurethan basierenden Copolymers erfolgte auf einem Doppelschneckenextruder (ZSK 32, L/D = 56, Werner & Pfleiderer) an dem an Zone 2 ein beheizbarer Mischtank angeschlossen wurde. Der Mischtrank und der Extruder wurden kontinuierlich mit Stickstoff begast. Im Mischtank wurde durch Erhitzen und zweistündiges Rühren eine homogene, flüssige Mischung aus 60 Gew.-% Caprolactam und 40 Gew.-% thermoplastischem Polyurethan (Elastollan A1185A) hergestellt. Diese Mischung wurde bei T₁ = 140 °C temperiert. Das Copolymer wurde hergestellt durch Zugabe von 11,6 Gew.-% Katalysator (Brüggolen C10) in Zone 1 des Extruders mittels Feststoffdosierung bei 60 °C und Flüssigdosierung der Caprolactam-Polyurethan-Mischung in Zone 2 bei 170 °C. Die Polymerisierung wurde in Zonen 3-15 bei T₂ = 170 °C erreicht mit einer Drehzahl von 200 U/min. Das entstandene Copolymer wurde mittels Unterwasserabscheidung granuliert und bei 80 °C getempert. Die Gesamtverweilzeit im Extruder betrug etwa 3 min.

### Beispiel 4

Beispiel 3 wurde wiederholt, wobei die Caprolactam-Polyurethan-Mischung statt für 2 h für 30 min vorgemischt und in Zone 2 statt bei T₁ = 170 °C bei T₁ = 140 °C in den Extruder dosiert wurde und die Polymerisation in Zonen 3-12 statt bei T₂ = 170 °C bei T₂ = 140 °C durchgeführt wurde. Außerdem wurde die Temperatur der Zonen 13, 14 und 15 jeweils auf 150 °C, 160 °C und 170 °C eingestellt.

### Beispiel 5

Beispiel 3 wurde wiederholt, wobei die Caprolactam-Polyurethan-Mischung statt für 2 h für 30 min vorgemischt wurde. Außerdem wurde die Katalysator-Konzentration auf 5 Gew.-% reduziert.

### Vergleichsbeispiel

Beispiel 3 wurde wiederholt, wobei statt Elastollan A1185A als thermoplastisches Polyurethan Elastollan E1170A eingesetzt wurde und die Caprolactam-Polyurethan-Mischung statt bei T₁ = 140 °C bei T₁ = 180 °C gemischt und in Zone 2 statt bei 170 °C bei 180 °C dosiert wurde. Außerdem wurde die Temperatur von Zonen 13-15 statt auf T₂ = 170 °C auf T₂ = 180 °C eingestellt.

### Beispiel 6

Beispiel 3 wurde wiederholt, wobei statt 60 Gew.-% Caprolactam und 40 Gew.-% thermoplastischem Polyurethan das Caprolactam und das thermoplastische Polyurethan in einer Menge von 40 Gew.-% Caprolactam und 60 Gew.-% thermoplastisches Polyurethan eingesetzt und statt für 2 Stunden für 30 min vorgemischt wurden.

### Beispiel 7

Beispiel 3 wurde wiederholt, wobei 5,1 Gew.-% Aktivator (Brüggolen C20) zu der Caprolactam-Polyurethan-Mischung in den Mischbehälter gegeben wurden.

### Beispiel 8

Die Herstellung des thermoplastischen, auf Polycaprolactam und einem thermoplastischen Polyurethan basierenden Copolymers erfolgte auf einem Doppelschneckenextruder (ZSK 32, L/D = 56, Werner & Pfleiderer), der kontinuierlich mit Stickstoff begast wurde. Das Copolymer wurde hergestellt durch Feststoffdosierung von 40 Gew.-% thermoplastischem Polyurethan (Elastollan A1185A) in Zone 1 (120 °C) und Aufschmelzen in Zone 2 (160 °C), 3 (220 °C) und 4 (180 °C) mit anschließender Flüssigdosierung von 60 Gew.-% Caprolactam in Zone 5 (140 °C). Folgende Zonen wurden auf 170 °C erhitzt und die Polymerisation wurde durch Zugabe von 11,6 Gew.-% Katalysator (Brüggolen C10) in Zone 7 mittels Feststoffdosierung gestartet. Die Gesamtverweilzeit im Extruder betrug etwa 3 min. Das entstandene Copolymer wurde mittels Unterwasserabscheidung granuliert und bei 80 °C getempert.

### Beispiel 9

Beispiel 8 wurde wiederholt, wobei statt 60 Gew.-% Caprolactam und 40 Gew.-% thermoplastischem Polyurethan das Caprolactam und das thermoplastische Polyurethan in einer Menge von 40 Gew.-% Caprolactam und 60 Gew.-% thermoplastisches Polyurethan (A1185A) eingesetzt wurden.

### Bestimmung der Berstdruckfestigkeit

Die Berstdruckfestigkeitbestimmung wurde an Formkörpern in Form von Schläuchen mit einem Außendurchmesser von 8,2 mm und einer Wandstärke von 8,2 mm durchgeführt. Dazu wurden 30 cm lange Proben der Schläuche an einem Ende verschlossen und das andere Ende an eine über ein Drosselventil an eine Druckluftversorgung angeschlossen. In einer auf 23 °C oder 70 °C temperierten Kammer wurde der Druck in der Schlauchprobe langsam (ca. 30 bar/15 s) bis zu Bersten erhöht. Protokolliert wurde der Berstdruck und die Zeit bis zum Bersten, aus der sich Rückschlüsse auf ein Aufblähen der Schläuche vor dem Bersten gewinnen lassen. Die Versuche wurden jeweils dreimal wiederholt.

**Tabelle 1**

| **Beispiel** | **3** | **4** | **5** | **6** | **7** | **8** | **9** | **Vergleichsbeispiel** |
|---|---|---|---|---|---|---|---|---|
| Caprolactam / Gew.-% | 60 | 60 | 60 | 40 | 60 | 60 | 40 | 60 |
| Brüggolen C10/ Gew.-% | 11,6 | 11,6 | 5 | 11,6 | 11,6 | 11,6 | 11,6 | 11,6 |
| Brüggolen C20 / Gew.-% | | | | | 5,1 | | | |
| Elastollan A1185A / Gew.-% | 40 | 40 | 40 | 60 | 40 | 40 | 60 | |
| Elastollan E1170A / Gew.-% | | | | | | | | 40 |
| Temperatur Mischer / °C | 140 | 140 | 140 | 140 | 140 | | | 180 |
| Vormischzeit / min | 120 | 30 | 30 | 30 | 30 | | | 120 |
| Temperatur Zone 1 / °C | 60 | 60 | 60 | 60 | 60 | 120 | 120 | 60 |
| Temperatur Zone 2 / °C | 170 | 140 | 170 | 170 | 170 | 160 | 160 | 180 |
| Temperatur Zone 3 / °C | 170 | 140 | 170 | 170 | 170 | 220 | 220 | 170 |
| Temperatur Zone 4 / °C | 170 | 140 | 170 | 170 | 170 | 180 | 180 | 170 |
| Temperatur Zone 5 / °C | 170 | 140 | 170 | 170 | 170 | 140 | 140 | 170 |
| Temperatur Zone 6-12 / °C | 170 | 140 | 170 | 170 | 170 | 170 | 170 | 170 |
| Temperatur Zone 13 / °C | 170 | 150 | 170 | 170 | 170 | 170 | 170 | 180 |
| Temperatur Zone 14 / °C | 170 | 160 | 170 | 170 | 170 | 170 | 170 | 180 |
| Temperatur Zone 15 / °C | 170 | 170 | 170 | 170 | 170 | 170 | 170 | 180 |
| Temperatur | 200 | 200 | 200 | 200 | 200 | 200 | 200 | 200 |
| Lochplatte / °C | | | | | | | | |
| Drehzahl / U/min | 200 | 200 | 200 | 200 | 200 | 200 | 200 | 200 |
| Durchsatz / kg/h | 15 | 15 | 15 | 15 | 15 | 15 | 15 | 15 |
| Gesamtverweilze it / min | 3 | 3 | 3 | 3 | 3 | 3 | 3 | 3 |

Die vorliegenden Beispiele zeigen deutlich die mit dem erfindungsgemäßen Verfahren verbundenen überraschenden Effekte. Dank dem speziellen, gemäß b) bereitgestellten TPU-Copolymer kann die Polymerisation gemäß Verfahrensschritt d) bei einer vorteilhaft niedrigen Temperatur T₂ von höchstens 175 °C durchgeführt werden, wie aus den erfindungsgemäßen Beispielen 1 bis 9 ersichtlich ist. Im Gegensatz dazu erfordert das Bereitstellen eines auf einem aromatischen Diisocyanat wie zum Beispiel MDI basierenden TPU-Copolymers eine Polymerisationstemperatur von ca. 180 °C, wie aus dem Vergleichsbeispiel ersichtlich ist.

### Zitierte Literatur

- G.S. Yang et. al., "Preparation and characterisation of thermoplastic polyurethane elastomer and polyamide 6 blends by in situ anionic ring-opening polymerization of epsilon-caprolactam", Polymer Engineering and Science 2006, 46, S. 1196-1203
- G.S. Yang et. al. "A novel approach to the preparation of thermoplastic polyurethane elastomer and polyamide 6 blends by in situ anionic ring-opening polymerisation of ε-caprolactam", Polym. Int. 2006, 55, Seiten 643-649
- DE 10 2006 036 539 A1

## Patentansprüche

1. Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
(i) einem Alkylendiisocyanat;
(ii) einem Alkylendiol; und
(iii) einem Polyalkylenether
basierenden Polyurethans mit einer Schmelztemperatur T₀;
c) Herstellen einer flüssigen Mischung einer Temperatur T₁ enthaltend das Caprolactam und das thermoplastische Polyurethan;
d) Zugeben eines Polymerisationskatalysators zur flüssigen Mischung gemäß c) unter Erhalt einer Mischung enthaltend das Caprolactam und das thermoplastische Polyurethan in einem Massenverhältnis von Caprolactam zu thermoplastischem Polyurethan im Bereich von 3:1 bis 1:4, und Polymerisieren bei einer Temperatur T₂ von höchstens 175 °C unter Erhalt des thermoplastischen Copolymers.

2. Verfahren nach Anspruch 1, wobei das Alkylendiisocyanat gemäß (i) ausgewählt ist aus der Gruppe bestehend aus C1- bis C20-Alkylendiisocyanaten und einem Gemisch aus zwei oder mehr davon, bevorzugt aus der Gruppe bestehend aus C3- bis C18-Alkylendiisocyanaten und einem Gemisch aus zwei oder mehr davon, weiter bevorzugt aus der Gruppe bestehend aus C6- bis C13-Alkylendiisocyanaten und einem Gemisch aus zwei oder mehr davon, weiter bevorzugt aus der Gruppe bestehend aus 1,6-Hexamethylendiisocyanat (HDI), 4,4'-Diisocyanato-dicyclohexylmethan (H12MDI), 1-Isocyanato-3-isocyanatomethyl-3,5,5-trimethylcyclo-hexan (IPDI) und einem Gemisch aus zwei oder mehr davon;
wobei das Alkylendiol gemäß (ii) bevorzugt ausgewählt ist aus der Gruppe bestehend aus C1- bis C20-Alkylendiolen und einem Gemisch aus zwei oder mehr davon, weiter bevorzugt aus der Gruppe bestehend aus C3- bis C8-Alkylendiolen und einem Gemisch aus zwei oder mehr davon, weiter bevorzugt aus der Gruppe bestehend aus C4- bis C6-Alkylendiolen und einem Gemisch aus zwei oder mehr davon, weiter bevorzugt aus der Gruppe bestehend aus 1,4-Butandiol, 1,6-Hexandiol und einem Gemisch davon; wobei der Polyalkylenether gemäß (iii) bevorzugt ausgewählt ist aus der Gruppe bestehend aus Poly(C1- bis C20-alkylen)ethern und einem Gemisch aus zwei oder mehr davon, weiter bevorzugt aus der Gruppe bestehend aus Poly(C2- bis C12-alkylen)ethern und einem Gemisch aus zwei oder mehr davon, weiter bevorzugt aus der Gruppe bestehend aus Poly(C2- bis C6-alkylen)ethern und einem Gemisch aus zwei oder mehr davon, wobei der Polyalkylenether gemäß (iii) weiter bevorzugt Polytetrahydrofuran ist.

3. Verfahren nach Anspruch 1 oder 2, wobei mindestens eine, bevorzugt mindestens zwei, weiter bevorzugt sämtliche der Komponenten Alkylendiisocyanat (i), Alkylendiol (ii) und Polyalkylenether (iii) einen linearen und/oder cyclischen Alkylenrest aufweisen, wobei weiter bevorzugt das Alkylendiisocyanat (i) einen linearen und/oder cyclischen Alkylenrest, das Alkylendiol (ii) einen linearen Alkylenrest und der Polyalkylenether (iii) einen linearen Alkylenrest aufweisen.

4. Verfahren nach einem der Ansprüche 1 bis 3, wobei T₀ im Bereich von 155 bis 280 °C, bevorzugt von 160 bis 250 °C, weiter bevorzugt von 170 bis 230 °C liegt.

5. Verfahren nach einem der Ansprüche 1 bis 4, wobei T₁ kleiner oder gleich T₀ ist, wobei T₁ bevorzugt im Bereich von 100 bis 175 °C, weiter bevorzugt von 100 bis 160 °C, weiter bevorzugt von 110 bis 150 °C liegt.

6. Verfahren nach einem der Ansprüche 1 bis 5, wobei T₂ im Bereich von 100 bis 175 °C, bevorzugt von 115 bis 170 °C, weiter bevorzugt von 130 bis 170 °C liegt.

7. Verfahren nach einem der Ansprüche 1 bis 6, wobei der Polymerisationskatalysator gemäß d) ein Salz von Caprolactam, bevorzugt ein Alkali- oder Erdalkalimetallsalz von Caprolactam, weiter bevorzugt ein Alkalimetallsalz von Caprolactam, weiter bevorzugt das Natriumsalz oder das Kaliumsalz von Caprolactam, weiter bevorzugt das Natriumsalz von Caprolactam ist.

8. Verfahren nach einem der Ansprüche 1 bis 7, wobei gemäß d) zusätzlich ein Polymerisationsaktivator zugegeben wird, wobei der Polymerisationsaktivator bevorzugt ausgewählt ist aus der Gruppe bestehend aus mit einer Carbonylgruppe N-substituierten Lactamen, aliphatischen und aromatischen Diisocyanaten, Allophanaten, Polyisocyanaten, aliphatischen und aromatischen Disäurehalogeniden, und einem Gemisch aus zwei oder mehr davon, bevorzugt aus der Gruppe bestehend aus N,N'-C1-bis N,N'-C20-alkylendicarbamoylcaprolactamen, N,N'-Alkylendicarbamoylcaprolactamen, N-Acetyl C3-C10 Lactamen, C2-C16 Alkylendiisocyanaten, C5-C12 Arylendiisocyanaten oder C5-C16 Arylenalkylendiisocyanaten, C1-C6 Alkylenallophanaten, C12-C24 Alkylenpolyisocyanaten, C2-C16 Alkylendisäurehalogeniden, C5-C12 Arylendisäurehalogeniden oder C5-C16 Arylenalkylendisäurehalogeniden, und einem Gemisch aus zwei oder mehr davon, weiter bevorzugt aus der Gruppe bestehend aus N,N'-C3- bis N,N'-C8-Alkylendicarbamoylcaprolactamen, N-Acetyl C4-C8 Lactamen, C4-C13 Alkylendiisocyanaten, C6-C10 Arylendiisocyanaten oder C7-C10 Arylenalkylendiisocyanaten, C2-C4 Alkylenallophanaten, C16-C20 Alkylenpolyisocyanaten, C4-C13 Alkylendisäurehalogeniden, C6-C10 Arylendisäurehalogeniden oder C8-C12 Arylenalkylendisäurehalogeniden, und einem Gemisch aus zwei oder mehr davon.

9. Verfahren nach einem der Ansprüche 1 bis 8, wobei gemäß d) durch Zugeben des Polymerisationskatalysators zur flüssigen Mischung gemäß c) eine Mischung enthaltend das Caprolactam und das thermoplastische Polyurethan in einem Massenverhältnis von Caprolactam zu thermoplastischem Polyurethan im Bereich von 7:3 bis 1:3, bevorzugt von 2:1 bis 3:7, weiter bevorzugt von 16:9 bis 9:16 erhalten wird.

10. Verfahren nach einem der Ansprüche 1 bis 9, wobei das Herstellen gemäß c) und das Zugeben und Polymerisieren gemäß d) als diskontinuierliches oder kontinuierliches Verfahren, bevorzugt als kontinuierliches Verfahren, weiter bevorzugt als kontinuierliches Verfahren umfassend ein Extrusionsverfahren, durchgeführt werden.

11. Thermoplastisches Copolymer, basierend auf Polycaprolactam und einem auf
(i) einem Alkylendiisocyanat;
(ii) einem Alkylendiol; und
(iii) einem Polyalkylenether
basierenden thermoplastischen Polyurethan,
wobei das Copolymer das thermoplastische Polyurethan in einer Menge von 25 bis 80 Gew.-%, bezogen auf die Summe der Gewichte des im Copolymer enthaltenen Caprolactams und thermoplastischen Polyurethans, enthält;
wobei das Alkylendiisocyanat gemäß (i) bevorzugt ausgewählt ist aus der Gruppe bestehend aus C1- bis C20-Alkylendiisocyanaten und einem Gemisch aus zwei oder mehr davon, weiter bevorzugt aus der Gruppe bestehend aus C3- bis C18-Alkylendiisocyanaten und einem Gemisch aus zwei oder mehr davon, weiter bevorzugt aus der Gruppe bestehend aus C6- bis C13-Alkylendiisocyanaten und einem Gemisch aus zwei oder mehr davon, weiter bevorzugt aus der Gruppe bestehend aus 1,6-Hexamethylendiisocyanat (HDI), 4,4'-Diisocyanatodicyclohexylmethan (H12MDI), 1-Isocyanato-3-isocyanatomethyl-3,5,5-trimethylcyclohexan (IPDI) und einem Gemisch aus zwei oder mehr davon;
wobei das Alkylendiol gemäß (ii) bevorzugt ausgewählt ist aus der Gruppe bestehend aus C1- bis C20-Alkylendiolen und einem Gemisch aus zwei oder mehr davon, weiter bevorzugt aus der Gruppe bestehend aus C3- bis C8-Alkylendiolen und einem Gemisch aus zwei oder mehr davon, weiter bevorzugt aus der Gruppe bestehend aus C4- bis C6-Alkylendiolen und einem Gemisch aus zwei oder mehr davon, weiter bevorzugt aus der Gruppe bestehend aus 1,4-Butandiol, 1,6-Hexandiol und einem Gemisch davon;
wobei der Polyalkylenether gemäß (iii) bevorzugt ausgewählt ist aus der Gruppe bestehend aus Poly(C1- bis C20-alkylen)ethern und einem Gemisch aus zwei oder mehr davon, weiter bevorzugt aus der Gruppe bestehend aus Poly(C2- bis C12-alkylen)ethern und einem Gemisch aus zwei oder mehr davon, weiter bevorzugt aus der Gruppe bestehend aus Poly(C2- bis C6-alkylen)ethern und einem Gemisch aus zwei oder mehr davon, wobei der Polyalkylenether gemäß (iii) weiter bevorzugt Polytetrahydrofuran ist.

12. Thermoplastisches Copolymer nach Anspruch 11, wobei mindestens eine, bevorzugt mindestens zwei, weiter bevorzugt sämtliche der Komponenten Alkylendiisocyanat (i), Alkylendiol (ii) und Polyalkylenether (iii) einen linearen und/oder cyclischen Alkylenrest aufweisen, wobei weiter bevorzugt das Alkylendiisocyanat (i) einen linearen und/oder cyclischen Alkylenrest, das Alkylendiol (ii) einen linearen Alkylenrest und der Polyalkylenether (iii) einen linearen Alkylenrest aufweisen.

13. Thermoplastisches Copolymer nach Anspruch 11 oder 12, wobei das Copolymer das thermoplastische Polyurethan in einer Menge von 30 bis 75 Gew.-%, bevorzugt 33 bis 70 Gew.-%, weiter bevorzugt 36 bis 64 Gew.-%, bezogen auf die Summe der Gewichte des im Copolymer enthaltenen Caprolactams und thermoplastischen Polyurethans, enthält.

14. Thermoplastisches Copolymer nach einem der Ansprüche 11 bis 13, hergestellt oder herstellbar durch ein Verfahren gemäß einem der Ansprüche 1 bis 10.

15. Formkörper, hergestellt oder herstellbar aus einem thermoplastischen Copolymer gemäß einem der Ansprüche 11 bis 14.

16. Verwendung eines thermoplastischen Copolymers gemäß einem der Ansprüche 11 bis 14 zur Herstellung eines Formkörpers.

## Claims

1. A process for preparing a thermoplastic copolymer based on polycaprolactam and a thermoplastic polyurethane, comprising:
a) providing caprolactam;
b) providing the thermoplastic polyurethane having a melting temperature T₀ and based on
(i) an alkylene diisocyanate;
(ii) an alkylenediol; and
(iii) a polyalkylene ether;
c) preparing a liquid mixture comprising the caprolactam and the thermoplastic polyurethane at a temperature T₁;
d) admixing a polymerization catalyst to the liquid mixture of c) to obtain a mixture comprising the caprolactam and the thermoplastic polyurethane in a mass ratio of caprolactam to thermoplastic polyurethane in the range from 3:1 to 1:4 and polymerizing at a temperature T₂ of at most 175°C to obtain the thermoplastic copolymer.

2. The process according to claim 1 wherein the alkylene diisocyanate of (i) is selected from the group consisting of C1 to C20 alkylene diisocyanates and a mixture of two or more thereof, preferably from the group consisting of C3 to C18 alkylene diisocyanates and a mixture of two or more thereof, more preferably from the group consisting of C6 to C13 alkylene diisocyanates and a mixture of two or more thereof, more preferably from the group consisting of 1,6-hexamethylene diisocyanate (HDI), 4,4'-diisocyanatodicyclohexylmethane (H12MDI), 1-isocyanato-3-isocyanatomethyl-3,5,5-trimethylcyclo-hexane (IPDI) and a mixture of two or more thereof;
wherein the alkylenediol of (ii) is preferably selected from the group consisting of C1 to C20 alkylenediols and a mixture of two or more thereof, more preferably from the group consisting of C3 to C8 alkylenediols and a mixture of two or more thereof, more preferably from the group consisting of C4 to C6 alkylenediols and a mixture of two or more thereof, more preferably from the group consisting of 1,4-butanediol, 1,6-hexanediol and a mixture thereof;
wherein the polyalkylene ether of (iii) is preferably selected from the group consisting of poly(C1 to C20 alkylene) ethers and a mixture of two or more thereof, more preferably from the group consisting of poly(C2 to C12 alkylene) ethers and a mixture of two or more thereof, further preferably from the group consisting of poly (C2 to C6 alkylene) ethers and a mixture of two or more thereof, wherein the polyalkylene ether of (iii) is further preferably polytetrahydrofuran.

3. The process according to claim 1 or 2 wherein one or more, preferably two or more, further preferably all of the components alkylene diisocyanate (i), alkylenediol (ii) and polyalkylene ether (iii) have a linear and/or cyclic alkylene moiety, wherein more preferably said alkylene diisocyanate (i) has a linear and/or cyclic alkylene moiety, said alkylenediol (ii) has a linear alkylene moiety and said polyalkylene ether (iii) has a linear alkylene moiety.

4. The process according to any of claims 1 to 3
wherein T₀ is in the range from 155 to 280°C, preferably from 160 to 250°C, more preferably from 170 to 230°C.

5. The process according to any of claims 1 to 4
wherein T₁ is not more than To, wherein T₁ is preferably in the range from 100 to 175°C, more preferably from 100 to 160°C, more preferably from 110 to 150°C.

6. The process according to any of claims 1 to 5
wherein T₂ is in the range from 100 to 175°C, preferably from 115 to 170°C, more preferably from 130 to 170°C.

7. The process according to any of claims 1 to 6
wherein the polymerization catalyst of d) is a salt of caprolactam, preferably an alkali or alkaline earth metal salt of caprolactam, more preferably an alkali metal salt of caprolactam, more preferably the sodium salt or the potassium salt of caprolactam, more preferably the sodium salt of caprolactam.

8. The process according to any of claims 1 to 7
wherein d) further comprises admixing a polymerization activator, wherein the polymerization activator is preferably selected from the group consisting of N-carbonyl-substituted lactams, aliphatic and aromatic diisocyanates, allophanates, polyisocyanates, aliphatic and aromatic diacyl halides, and a mixture of two or more thereof, preferably from the group consisting of N,N'-C1- to N,N'-C20-alkylenedicarbamoylcaprolactams, N,N'-alkylenedicarbamoylcaprolactams, N-acetyl C3-C10 lactams, C2-C16 alkylene diisocyanates, C5-C12 arylene diisocyanates or C5-C16 arylenealkylene diisocyanates, C1-C6 alkylene allophanates, C12-C24 alkylene polyisocyanates, C2-C16 alkylenediacyl halides, C5-C12 arylenediacyl halides or C5-C16 arylenealkylenediacyl halides, and a mixture of two or more thereof, more preferably from the group consisting of N,N'-C3-to N,N'-C8-alkylenedicarbamoylcaprolactams, N-acetyl C4-C8 lactams, C4-C13 alkylene diisocyanates, C6-C10 arylene diisocyanates or C7-C10 arylenealkylene diisocyanates, C2-C4 alkylene allophanates, C16-C20 alkylene polyisocyanates, C4-C13 alkylenediacyl halides, C6-C10 arylenediacyl halides or C8-C12 arylenealkylenediacyl halides, and a mixture of two or more thereof.

9. The process according to any of claims 1 to 8
wherein admixing the polymerization catalyst to the liquid mixture of c) as per d) provides a mixture comprising the caprolactam and the thermoplastic polyurethane in a mass ratio of caprolactam to thermoplastic polyurethane in the range from 7:3 to 1:3, preferably from 2:1 to 3:7, more preferably from 16:9 to 9:16.

10. The process according to any of claims 1 to 9
wherein the preparing as per c) and the admixing and polymerizing as per d) are carried out as a batch process or as a continuous process, preferably as a continuous process, more preferably as a continuous process comprising an extrusion process.

11. A thermoplastic copolymer based on polycaprolactam and a thermoplastic polyurethane based on
(i) an alkylene diisocyanate;
(ii) an alkylenediol; and
(iii) a polyalkylene ether,
wherein the copolymer comprises the thermoplastic polyurethane in an amount of 25 to 80 wt%, based on the sum total of the weights of the caprolactam and of the thermoplastic polyurethane which are present in the copolymer;
wherein the alkylene diisocyanate of (i) is preferably selected from the group consisting of C1 to C20 alkylene diisocyanates and a mixture of two or more thereof, more preferably from the group consisting of C3 to C18 alkylene diisocyanates and a mixture of two or more thereof, more preferably from the group consisting of C6 to C13 alkylene diisocyanates and a mixture of two or more thereof, more preferably from the group consisting of 1,6-hexamethylene diisocyanate (HDI), 4,4'-diisocyanatodicyclohexylmethane (H12MDI), 1-isocyanato-3-isocyanatomethyl-3,5,5-trimethylcyclohexane (IPDI) and a mixture of two or more thereof;
wherein the alkylenediol of (ii) is preferably selected from the group consisting of C1 to C20 alkylenediols and a mixture of two or more thereof, more preferably from the group consisting of C3 to C8 alkylenediols and a mixture of two or more thereof, more preferably from the group consisting of C4 to C6 alkylenediols and a mixture of two or more thereof, more preferably from the group consisting of 1,4-butanediol, 1,6-hexanediol and a mixture thereof;
wherein the polyalkylene ether of (iii) is preferably selected from the group consisting of poly(C1 to C20 alkylene) ethers and a mixture of two or more thereof, more preferably from the group consisting of poly(C2 to C12 alkylene) ethers and a mixture of two or more thereof, further preferably from the group consisting of poly(C2 to C6 alkylene) ethers and a mixture of two or more thereof, wherein the polyalkylene ether of (iii) is further preferably polytetrahydrofuran.

12. The thermoplastic copolymer according to claim 11
wherein one or more, preferably two or more, further preferably all of the components alkylene diisocyanate (i), alkylenediol (ii) and polyalkylene ether (iii) have a linear and/or cyclic alkylene moiety, wherein more preferably said alkylene diisocyanate (i) has a linear and/or cyclic alkylene moiety, said alkylenediol (ii) has a linear alkylene moiety and said polyalkylene ether (iii) has a linear alkylene moiety.

13. The thermoplastic copolymer according to claim 11 or 12 wherein the copolymer comprises the thermoplastic polyurethane in an amount of 30 to 75 wt%, preferably 33 to 70 wt%, more preferably 36 to 64 wt%, based on the sum total of the weights of the caprolactam and of the thermoplastic polyurethane which are present in the copolymer.

14. The thermoplastic copolymer according to any of claims 11 to 13, obtained or obtainable by a process according to any of claims 1 to 10.

15. A shaped article made of or obtainable from a thermoplastic copolymer according to any of claims 11 to 14.

16. The method of using a thermoplastic copolymer according to any of claims 11 to 14 in the manufacture of a shaped article.

## Revendications

1. Procédé de fabrication d'un copolymère thermoplastique à base de polycaprolactame et d'un polyuréthane thermoplastique, comprenant :
a) la préparation de caprolactame ;
b) la préparation du polyuréthane thermoplastique à base de
(i) un diisocyanate d'alkylène
(ii) un diol d'alkylène ; et
(iii) un polyéther d'alkylène,
ayant une température de fusion T₀ ;
c) la fabrication d'un mélange liquide ayant une température T₁ contenant le caprolactame et le polyuréthane thermoplastique ;
d) l'ajout d'un catalyseur de polymérisation au mélange liquide selon c) pour obtenir un mélange contenant le caprolactame et le polyuréthane thermoplastique en un rapport en masse entre le caprolactame et le polyuréthane thermoplastique dans la plage allant de 3:1 à 1:4, et la polymérisation à une température T₂ d'au plus 175 °C pour obtenir le copolymère thermoplastique.

2. Procédé selon la revendication 1, dans lequel le diisocyanate d'alkylène selon (i) est choisi dans le groupe constitué par les diisocyanates d'alkylène en C1 à C20 et un mélange de deux ou plus d'entre eux, de préférence dans le groupe constitué par les diisocyanates d'alkylène en C3 à C18 et un mélange de deux ou plus d'entre eux, de manière davantage préférée dans le groupe constitué par les diisocyanates d'alkylène en C6 à C13 et un mélange de deux ou plus d'entre eux, de manière davantage préférée dans le groupe constitué par le diisocyanate de 1,6-hexaméthylène (HDI), le 4,4'-diisocyanatodicyclohexylméthane (H12MDI), le 1-isocyanato-3-isocyanatométhyl-3,5,5-triméthylcyclohexane (IPDI) et un mélange de deux ou plus d'entre eux ;
dans lequel le diol d'alkylène selon (ii) est choisi de préférence dans le groupe constitué par les alkylène-diols en C1 à C20 et un mélange de deux ou plus d'entre eux, de manière davantage préférée dans le groupe constitué par les alkylène-diols en C3 à C8 et un mélange de deux ou plus d'entre eux, de manière davantage préférée dans le groupe constitué par les alkylène-diols en C4 à C6 et un mélange de deux ou plus d'entre eux, de manière davantage préférée dans le groupe constitué par le 1,4-butanediol, le 1,6-hexanediol et un mélange d'entre eux ;
dans lequel le polyéther d'alkylène selon (iii) est choisi de préférence dans le groupe constitué par les polyéthers d'alkylène en C1 à C20 et un mélange de deux ou plus d'entre eux, de préférence dans le groupe constitué par les polyéthers d'alkylène en C2 à C12 et un mélange de deux ou plus d'entre eux, de manière davantage préférée dans le groupe constitué par les polyéthers d'alkylène en C2 à C6 et un mélange de deux ou plus d'entre eux, le polyéther d'alkylène selon (iii) étant de manière davantage préférée le polytétrahydrofurane.

3. Procédé selon la revendication 1 ou 2, dans lequel au moins un, de préférence au moins deux, de manière davantage préférée tous les composants diisocyanate d'alkylène (i), diol d'alkylène (ii) et polyéther d'alkylène (iii) comprennent un radical alkylène linéaire et/ou cyclique, de manière davantage préférée le diisocyanate d'alkylène (i) comprenant un radical alkylène linéaire et/ou cyclique, le diol d'alkylène (ii) comprenant un radical alkylène linéaire et le polyéther d'alkylène (iii) comprenant un radical alkylène linéaire.

4. Procédé selon l'une quelconque des revendications 1 à 3, dans lequel T₀ se situe dans la plage allant de 155 à 280 °C, de préférence de 160 à 250 °C, de manière davantage préférée de 170 à 230 °C.

5. Procédé selon l'une quelconque des revendications 1 à 4, dans lequel T₁ est inférieure ou égale à T₀, T₁ se situant de préférence dans la plage allant de 100 à 175 °C, de manière davantage préférée de 100 à 160 °C, de manière davantage préférée de 110 à 150 °C.

6. Procédé selon l'une quelconque des revendications 1 à 5, dans lequel T₂ se situe dans la plage allant de 100 à 175 °C, de préférence de 115 à 170 °C, de manière davantage préférée de 130 à 170 °C.

7. Procédé selon l'une quelconque des revendications 1 à 6, dans lequel le catalyseur de polymérisation selon d) est un sel de caprolactame, de préférence un sel de métal alcalin ou alcalino-terreux de caprolactame, de manière davantage préférée un sel de métal alcalin de caprolactame, de manière davantage préférée le sel de sodium ou le sel de potassium de caprolactame, de manière davantage préférée le sel de sodium de caprolactame.

8. Procédé selon l'une quelconque des revendications 1 à 7, dans lequel, selon d), un activateur de polymérisation est en outre ajouté, l'activateur de polymérisation étant de préférence choisi dans le groupe constitué par les lactames N-substitués avec un groupe carbonyle, les diisocyanates aliphatiques et aromatiques, les allophanates, les polyisocyanates, les halogénures de diacides aliphatiques et aromatiques, et un mélange de deux ou plus d'entre eux, de préférence dans le groupe constitué par les N,N'-alkylène en C1 à C20-dicarbamoylcaprolactames, les N,N'-alkylène-dicarbamoylcaprolactames, les N-acétyl-lactames en C3-C10, les diisocyanates d'alkylène en C2-C16, les diisocyanates d'arylène en C5-C12 ou les diisocyanates d'arylène-alkylène en C5-C16, les allophanates d'alkylène en C1-C6, les polyisocyanates d'alkylène en C12-C24, les halogénures d'acides alkylène-dioïques en C2-C16, les halogénures d'acides arylène-dioïques en C5-C12 ou les halogénures d'acides arylène-alkylène-dioïques en C5-C16, et un mélange de deux ou plus d'entre eux, de manière davantage préférée dans le groupe constitué par les N,N'-alkylène en C3 à C8-dicarbamoylcaprolactames, les N-acétyl-lactames en C4-C8, les diisocyanates d'alkylène en C4-C13, les diisocyanates d'arylène en C6-C10 ou les diisocyanates d'arylène-alkylène en C7-C10, les allophanates d'alkylène en C2-C4, les polyisocyanates d'alkylène en C16-C20, les halogénures d'acides alkylène-dioïques en C4-C13, les halogénures d'acides arylène-dioïques en C6-C10 ou les halogénures d'acides arylène-alkylène-dioïques en C8-C12, et un mélange de deux ou plus d'entre eux.

9. Procédé selon l'une quelconque des revendications 1 à 8, dans lequel, selon d), par ajout du catalyseur de polymérisation au mélange liquide selon c), un mélange contenant le caprolactame et le polyuréthane thermoplastique en un rapport en masse entre le caprolactame et le polyuréthane thermoplastique dans la plage allant de 7:3 à 1:3, de préférence de 2:1 à 3:7, de manière davantage préférée de 16:9 à 9:16, est obtenu.

10. Procédé selon l'une quelconque des revendications 1 à 9, dans lequel la fabrication selon c) et l'ajout et la polymérisation selon d) sont réalisés sous la forme d'un procédé continu ou continu, de préférence sous la forme d'un procédé continu, de manière davantage préférée sous la forme d'un procédé continu comprenant un procédé d'extrusion.

11. Copolymère thermoplastique, à base de polycaprolactame et d'un polyuréthane thermoplastique à base de
(i) un diisocyanate d'alkylène ;
(ii) un diol d'alkylène ; et
(iii) un polyéther d'alkylène, le copolymère contenant le polyuréthane thermoplastique en une quantité de 25 à 80 % en poids, par rapport à la somme des poids du caprolactame et du polyuréthane thermoplastique contenus dans le copolymère ;
le diisocyanate d'alkylène selon (i) étant de préférence choisi dans le groupe constitué par les diisocyanates d'alkylène en C1 à C20 et un mélange de deux ou plus d'entre eux, de manière davantage préférée dans le groupe constitué par les diisocyanates d'alkylène en C3 à C18 et un mélange de deux ou plus d'entre eux, de manière davantage préférée dans le groupe constitué par les diisocyanates d'alkylène en C6 à C13 et un mélange de deux ou plus d'entre eux, de manière davantage préférée dans le groupe constitué par le diisocyanate de 1,6-hexaméthylène (HDI), le 4,4'-diisocyanatodicyclohexylméthane (H12MDI), le 1-isocyanato-3-isocyanatométhyl-3,5,5-triméthylcyclohexane (IPDI) et un mélange de deux ou plus d'entre eux ;
le diol d'alkylène selon (ii) étant de préférence choisi dans le groupe constitué par les alkylène-diols en C1 à C20 et un mélange de deux ou plus d'entre eux, de manière davantage préférée dans le groupe constitué par les alkylène-diols en C3 à C8 et un mélange de deux ou plus d'entre eux, de manière davantage préférée dans le groupe constitué par les alkylène-diols en C4 à C6 et un mélange de deux ou plus d'entre eux, de manière davantage préférée dans le groupe constitué par le 1,4-butanediol, le 1,6-hexanediol et un mélange d'entre eux ;
le polyéther d'alkylène selon (iii) étant de préférence choisi dans le groupe constitué par les polyéthers d'alkylène en C1 à C20 et un mélange de deux ou plus d'entre eux, de manière davantage préférée dans le groupe constitué par les polyéthers d'alkylène en C2 à C12 et un mélange de deux ou plus d'entre eux, de manière davantage préférée dans le groupe constitué par les polyéthers d'alkylène en C2 à C6 et un mélange de deux ou plus d'entre eux, le polyéther d'alkylène selon (iii) étant de manière davantage préférée le polytétrahydrofurane.

12. Copolymère thermoplastique selon la revendication 11, dans lequel au moins un, de préférence au moins deux, de manière davantage préférée tous les composants diisocyanate d'alkylène (i), diol d'alkylène (ii) et polyéther d'alkylène (iii) comprennent un radical alkylène linéaire et/ou cyclique, de manière davantage préférée le diisocyanate d'alkylène (i) comprenant un radical alkylène linéaire et/ou cyclique, le diol d'alkylène (ii) comprenant un radical alkylène linéaire et le polyéther d'alkylène (iii) comprenant un radical alkylène linéaire.

13. Copolymère thermoplastique selon la revendication 11 ou 12, dans lequel le copolymère contient le polyuréthane thermoplastique en une quantité de 30 à 75 % en poids, de préférence de 33 à 70 % en poids, de manière davantage préférée de 36 à 64 % en poids, par rapport à la somme des poids du caprolactame et du polyuréthane thermoplastique contenus dans le copolymère.

14. Copolymère thermoplastique selon l'une quelconque des revendications 11 à 13, fabriqué ou fabricable par un procédé selon l'une quelconque des revendications 1 à 10.

15. Corps moulé, fabriqué ou fabricable à partir d'un copolymère thermoplastique selon l'une quelconque des revendications 11 à 14.

16. Utilisation d'un copolymère thermoplastique selon l'une quelconque des revendications 11 à 14 pour la fabrication d'un corps moulé.
